# EUROPÄISCHE PATENTANMELDUNG

(11) **EP 2 662 842 A2**
(43) Veröffentlichungstag der Anmeldung: **13.11.2013**
(21) Anmeldenummer: 13165151.5
(22) Anmeldetag: 24.04.2013
(51) Int. Cl.: G07F 13/10, A47J 31/40, B67D 1/04

(54) **Getränkeautomat, Antriebsvorrichtung, Becherwerk, Verfahren zum Betreiben eines Getränkeautomaten**

(30) Priorität: 08.05.2012 DE 102012207665
(71) Anmelder: SIELAFF GMBH & CO. KG AUTOMATENBAU, 91567 Herrieden (DE)
(72) Erfinder: Schindler, Bernhard, 91572 Herrieden (DE); Bayer, Josef, 91567 Herrieden (DE)
(74) Vertreter: Isarpatent

(57) **Zusammenfassung**

Die vorliegende Erfindung betrifft einen Getränkeautomat zur Ausgabe von Getränken und flüssigen Lebensmitteln, mit einem Ausgabebereich, mit einer im Ausgabebereich angeordneten Befüllvorrichtung, mit einer im Ausgabebereich angeordneten beweglichen Ausgabevorrichtung, wobei die Ausgabevorrichtung in eine geöffnete und in eine geschlossene Stellung bewegbar ist und zumindest eine Ausgabekammer aufweist, die der geöffneten Stellung zugeordnet ist, mit einer Steuereinrichtung, welche die Ausgabevorrichtung derart steuert, dass die Ausgabevorrichtung in der geöffneten Stellung die Ausgabekammer und die Befüllvorrichtung für einen Nutzer zugänglich freigibt und in der geschlossenen Stellung die Ausgabekammer und die Befüllvorrichtung unzugänglich versperrt. Die vorliegende Erfindung betrifft ferner eine Antriebsvorrichtung, ein Becherwerk sowie ein Verfahren zum Betreiben eines Getränkeautomaten.

## Beschreibung

### GEBIET DER ERFINDUNG

Die vorliegende Erfindung betrifft einen Getränkeautomaten zur Ausgabe von flüssigen Lebensmitteln. Die vorliegende Erfindung betrifft ferner eine Antriebsvorrichtung für ein Drehkarussell, ein Becherwerk für einen Getränkeautomaten sowie ein Verfahren zum Betreiben des Getränkeautomaten.

### TECHNISCHER HINTERGRUND

Die vorliegende Erfindung befindet sich im Umfeld von Selbstbedienungsautomaten und insbesondere von als Getränkeautomaten ausgebildeten Selbstbedienungsautomaten. Ein Selbstbedienungsautomat ist ein Apparat, welcher Waren zumeist gegen Bezahlung (Verkaufsautomat) ausgibt. Eine Sonderform eines Selbstbedienungsautomaten ist ein Getränkeautomat, welcher meistens für den Verkauf von Kalt- oder Heißgetränken, aber auch für andere flüssige Lebensmittel ausgelegt ist. Getränkeautomaten liefern das Getränk in offener Form in einem Becher, als Flaschen, Dosen oder dergleichen. Andere Getränkeautomaten geben auf Anwahl ein Getränk aus und der Benutzer hat dafür Sorge zu tragen, dass ein geeigneter Becher, in welchen das Getränk ausgegeben werden soll, bereit steht.

Die vorliegende Erfindung sowie die ihr zugrunde liegende Problematik werden nachfolgend mit Bezug auf einen als Heißgetränkeautomaten ausgebildeten Getränkeautomaten erläutert, ohne jedoch die Erfindung dahingehend einzuschränken.

Bei modernen Heißgetränkeautomaten kann ein Benutzer ein spezielles Heißgetränk auswählen. Der Heißgetränkeautomat gibt nach der Produktauswahl zunächst einen Becher in einen Becherhalter aus, in welchen anschließend das entsprechende Heißgetränk gefüllt wird. Der Becherhalter befindet sich an einer von außen offen zugänglichen Ausgabevorrichtung.

Alternativ befindet sich die Ausgabevorrichtung verborgen im Automaten. In diesem Fall sind Mittel vorgesehen, den befüllten Becher zu einer für den Benutzer zugänglichen Position zu transportieren. Die Europäische Patentanmeldung EP 2 369 559 A1 zeigt einen derartigen Heißgetränkeautomaten. Die Becherausgabevorrichtung dieses Heißgetränkeautomaten ist dazu ausgebildet, einen Becher mittels eines rotierbaren Becherhalters ("cup holder device") mit unterschiedlichen Produktkomponenten zu befüllen und anschließend den befüllten Becher durch Rotation des Becherhalters an eine dem Benutzer zugängliche Stelle zu transportieren und ihn dort dem Benutzer zu präsentieren.

Oftmals besteht bei einem Benutzer, welcher einen Getränkeautomaten regelmäßig nutzt, das Bedürfnis, aus einer eigenen Tasse bzw. aus einem eigenen Becher zu trinken. Gleichzeitig besteht für andere Benutzer, welche den Getränkeautomaten z. B. nur selten oder einmalig benutzen und folglich keine eigene Tasse parat haben, das Bedürfnis, einen Becher von dem Getränkeautomaten zur Verfügung gestellt zu bekommen. Diese Kombination von Bedürfnissen unterschiedlicher Benutzer bzw. Benutzergruppen tritt insbesondere an Orten auf, die für eine hohe Anzahl von Personen zugänglich oder öffentlich zugänglich sind, an denen sich jedoch gewisse Personen, z.B. an dem jeweiligen Ort arbeitende Angestellte, regelmäßig aufhalten. Der eben erwähnte Heißgetränkeautomat der EP 2 369 559 A1 trägt hier lediglich dem zweiten Bedürfnis Rechnung.

Wenn die Ausgabevorrichtung von außen stets offen zugänglich wäre, könnte ein Benutzer mit dem ersten Bedürfnis seinen eigenen Becher benutzen. Ein Benutzer mit dem zweiten Bedürfnis könnte manuell einen Becher aus einem gegebenenfalls vorhandenen Bechervorrat entnehmen und an eine von außen jederzeit zugängliche Heißgetränkeausgabevorrichtung bringen. Allerdings müsste er den Becher zunächst selbst aus einem Bechervorrat aussuchen, ihn dann vereinzeln und entnehmen. Dies ist relativ unkomfortabel. Zudem wird dies auch den Anforderungen für Automaten, die z. B an öffentlich zugänglichen Orten aufgestellt sind, aufgrund der offen zugänglichen Heißgetränkeausgabevorrichtung nicht gerecht. An derartigen Orten aufgestellte Automaten sollten robust gegen Vandalismus und Hygieneeinflüsse aus der Umgebung sein und dennoch sicher zu betreiben zu sein.

### ZUSAMMENFASSUNG DER ERFINDUNG

Vor diesem Hintergrund liegt der vorliegenden Erfindung die Aufgabe zugrunde, einen verbesserten Ausgabemechanismus für einen Getränkeautomaten zur Verfügung zu stellen.

Erfindungsgemäß wird diese Aufgabe durch einen Getränkeautomaten mit den Merkmalen des Patentanspruchs 1 und/oder durch eine Antriebsvorrichtung mit den Merkmalen des Patentanspruchs 13 und/oder ein Becherwerk mit den Merkmalen des Patentanspruchs 16 und/oder ein Verfahren mit den Merkmalen des Patentanspruchs 17 gelöst.

Demgemäß ist vorgesehen:
- Ein Getränkeautomat zur Ausgabe von Getränken und flüssigen Lebensmitteln, mit einem Ausgabebereich, mit einer im Ausgabebereich angeordneten Befüllvorrichtung, mit einer im Ausgabebereich angeordneten beweglichen Ausgabevorrichtung, wobei die Ausgabevorrichtung in eine geöffnete und in eine geschlossene Stellung bewegbar ist und zumindest eine Ausgabekammer aufweist, die der geöffneten Stellung zugeordnet ist, mit einer Steuereinrichtung, welche die Ausgabevorrichtung derart steuert, dass die Ausgabevorrichtung in der geöffneten Stellung die Ausgabekammer und die Befüllvorrichtung für einen Nutzer zugänglich freigibt und in der geschlossenen Stellung die Ausgabekammer und die Befüllvorrichtung unzugänglich versperrt.
- Eine Antriebsvorrichtung für ein Drehkarussell, mit einem Elektromotor, mit einer drehfest mit dem Drehkarussell gekoppelten Antriebsscheibe, mit einem Riemen, wobei der Riemen auf dem Umfang der Antriebsscheibe läuft, wobei die Antriebsscheibe über den Riemen mit dem Elektromotor antreibbar vorgesehen ist, wobei der Riemen und die Antriebsscheibe derart ausgelegt sind, dass der Riemen auf dem Umfang der Antriebsscheibe durchrutscht, sobald ein der Rotation des Drehkarussells entgegen wirkender Widerstand ein Widerstandsmoment an der Antriebsscheibe hervorruft, welches größer ist als ein von dem Riemen an der Antriebsscheibe hervorgerufenes Reibmoment.
- Ein Becherwerk für einen Getränkeautomaten, mit einer zentralen Vereinzelungskammer, welche Einrichtungen zur Vereinzelung und zur Ausgabe von in Becherstapeln in der Vereinzelungskammer angeordneten Bechern aufweist, wobei um die Vereinzelungskammer eine rotierbare zylindrische Schale mit einer Ausnehmung angeordnet ist, mit einer Vielzahl von Vorratskammern, die zur Bevorratung weiterer Becherstapel vorgesehen sind und die zumindest abschnittsweise um die Vereinzelungskammer herum angeordnet sind, mit einer Vielzahl von Federn, die in den Vorratskammern vorgesehenen sind und die derart ausgelegt sind, dass sie den jeweiligen, in einer Vorratskammer bevorrateten, Becherstapel gegen die Schale drücken, mit einer Steuervorrichtung, welche die Schale derart steuert, dass die Schale die Position der Ausnehmung beim Rotieren zu einer Vorratskammer verlagert, wobei ein Becherstapel von der Federkraft der jeweiligen Feder durch die Ausnehmung hindurch in die Vereinzelungskammer beförderbar ist.
- -Ein Verfahren zum Betreiben eines Getränkeautomaten mit den Schritten: (a) Anfordern eines Getränks mittels eines benutzerbedienbaren Eingabemoduls; (b) Bewegen einer Ausgabevorrichtung unter Verwendung einer Antriebsvorrichtung, wobei die Ausgabevorrichtung aus einer geschlossenen Stellung, in der eine Befüllvorrichtung des Getränkeautomaten einem Benutzer unzugänglich versperrt ist, in eine geöffnete Stellung, in welcher die Befüllvorrichtung dem Benutzer zugänglich freigegeben ist, bewegt wird; (c) Zuführen eines Bechers an eine Befüllposition an der Befüllvorrichtung; (d) Befüllen des Bechers mittels der Befüllvorrichtung; (e) Bewegen der Ausgabevorrichtung mittels der Antriebsvorrichtung in die geschlossene Stellung, nachdem der befüllte Becher entnommen wurde.

Die der vorliegenden Erfindung zugrunde liegende Erkenntnis/Idee besteht darin, eine die Befüllvorrichtung schützende Ausgabevorrichtung vorzusehen und dennoch die Befüllvorrichtung an einer, bei geöffneter Ausgabevorrichtung, benutzerzugänglichen Position vorzusehen.

Somit wird es sowohl ermöglicht einen Becher beim Öffnen der Ausgabevorrichtung an die Befüllposition zu transportieren und somit eine automatische Becherzuführung zur der Befüllposition bereitzustellen, als auch die Möglichkeit geschaffen, die Ausgabevorrichtung ohne Becherzufuhr zum Befüllen eines externen, insbesondere von einem Benutzer selbst mitgebrachten, Bechers bzw. einer Tasse zu öffnen, wobei der Becher bzw. die Tasse von dem Benutzer selbst an die Befüllposition zuführbar ist.

Um diese Funktionalität der Ausgabevorrichtung verletzungssicher und selbstschützend gewährleisten zu können, ist eine erfindungsgemäße Antriebsvorrichtung zum Antrieb der Ausgabevorrichtung vorgesehen.

Um die Funktionalität der Becherzuführung in die Ausgabevorrichtung zu realisieren, ist zumindest ein erfindungsgemäßes Becherwerk zum Bevorraten von Bechern vorgesehen.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausführungsform weist die Ausgabevorrichtung ein Drehkarussell auf. An dem Drehkarussell ist eine Umfangswand vorgesehen. Die Umfangswand weist zumindest eine im Bereich der Ausgabekammer vorgesehenen Ausnehmung auf. Somit ist die Ausgabevorrichtung durch Rotation des Drehkarussells in die geöffnete und geschlossene Stellung bewegbar.

In einer weiteren Ausführungsform weist die Ausgabevorrichtung eine Linearfördereinrichtung auf. Diese ist mit einem Längswandabschnitt in Bewegungsrichtung versehen. Der Längswandabschnitt weist eine im Bereich der Ausgabekammer vorgesehene Ausnehmung auf. Die Ausgabevorrichtung ist mittels Linearbewegung in die geöffnete und geschlossene Stellung bewegbar.

In einer weiteren bevorzugten Ausführungsform weist die Ausgabevorrichtung eine Blende auf. An der Blende ist eine Ausgabeöffnung vorgesehen. Die Ausgabevorrichtung ist hinter der Blende bewegbar ausgebildet. Bei einem Drehkarussell ist dasselbe hinter der Blende drehbar ausgebildet. Die Steuereinrichtung steuert das Drehkarussell derart, dass die Ausgabeöffnung in der geschlossenen Stellung von der Umfangswand unzugänglich versperrt ist und in der geöffneten Stellung die Ausgabekammer durch die Ausgabeöffnung und durch die Ausnehmung zugänglich freigegeben ist. Bei einer Linearfördereinrichtung ist diese linear hinter der Blende verschiebbar ausgebildet. Die Steuereinrichtung steuert die Linearfördereinrichtung derart, dass die Ausgabeöffnung der Linearfördereinrichtung in der geschlossenen Stellung von dem Längswandabschnitt unzugänglich versperrt ist. In der geöffneten Stellung ist die Ausgabekammer wie entsprechend durch die Ausgabeöffnung und durch die Ausnehmung des Längswandabschnitts zugänglich freigegeben. Alternativ zu der Umfangswand bzw. dem Längswandabschnitt ist auch eine Fall-und/oder Schiebetür an der Blende denkbar, welche die Ausgabeöffnung in der geschossenen Position unzugänglich versperrt.

In einer vorteilhaften Ausführungsform ist zumindest ein Becherwerk vorgesehen. Das Becherwerk ist zur Bevorratung einer Vielzahl von Bechern ausgebildet. Das Becherwerk weist eine Vereinzelungsvorrichtung auf, die zur Ausgabe einzelner Bechern in die Ausgabekammer ausgebildet ist. Zumindest ein Becherwerk ist dahingehend zu verstehen, dass auch zwei oder mehrere Becherwerke vorgesehen sein können. Die Vereinzelungsvorrichtung ist derart vorgesehen, dass sie aus einem Becherkollektiv, insbesondere einem Becherstapel, einzelne Becher zu entnehmen im Stande ist. Des Weiteren ist sie zum kontrollierten Ausgeben einzelner Becher in die Ausgabekammer ausgebildet. Das Becherwerk kann dabei beispielsweise mittels der Steuereinrichtung des Getränkeautomaten derart steuerbar sein, dass es einen Becher ausgibt, wenn sich eine Ausgabekammer an der Vereinzelungsvorrichtung befindet. Insbesondere befindet sich die Ausgabekammer dazu direkt unter der Vereinzelungseinrichtung, so dass der einzelne Becher in die Ausgabekammer fallengelassen wird. Das Becherwerk kann alternativ oder zusätzlich auch eine eigene, separate Steuervorrichtung zum Steuern des Becherwerks aufweisen.

In einer Ausführungsform weist die Ausgabevorrichtung eine Führungseinrichtung auf. Die Führungseinrichtung ist derart ausgebildet, dass sie einen sich in der Ausgabekammer befindenden Becher beim Öffnen der Ausgabevorrichtung zu einer Befüllposition an der Befüllvorrichtung führt. Somit wird sichergestellt, dass der Becher die Befüllposition korrekt einnimmt und das Getränk ausschließlich in den Becher ausgegeben wird. Bevorzugt berührt die Führungseinrichtung dabei nicht die Mundrolle des Bechers, was Vorteile bezüglich Hygiene mit sich bringt.

In einer bevorzugten Ausführungsform sind an der Führungseinrichtung Becherfänger vorgesehen. Becherfänger sind dazu ausgebildet, einen jeweiligen Becher während der Ausgabe aus dem Becherwerk in die Ausgabekammer zu führen. Alternativ oder zusätzlich kann er die Becher auch verkippsicher in der Ausgabekammer platzieren. Die Becherfänger weisen Führungselemente auf, welche einen von der Vereinzelungsvorrichtung ausgegebenen Becher, insbesondere wenn dieser fallengelassen wird, aufnehmen und seine richtige Positionierung sicherstellen. Die Führungselemente werden von Adaptionsringen gehalten, welche an der Ausgabevorrichtung befestigt sind. Die Becherfänger bewegen sich somit gemeinsam mit der Ausgabevorrichtung. Alternativ können die Adaptionsringe der Becherfänger auch unbeweglich an dem Becherwerk befestigt sein. In diesem Fall sind die Führungselemente so positioniert, dass sie oberhalb eines sich in seiner richtigen Position in der Ausgabekammer befindenden Bechers angeordnet sind. Der Becher wird dann nur während des Herunterfallens geführt. Anschließend steht der Becher frei in der Ausgabekammer. Beim Bewegen der Ausgabevorrichtung bewegt sich der Becher unterhalb der Führungselemente an diesen vorbei.

In einer weiteren bevorzugten Ausführungsform ist die Ausgabevorrichtung in eine zweite geöffnete Stellung bewegbar. Die Ausgabevorrichtung weist eine der zweiten geöffneten Stellung zugeordnete Bechereinstellkammer auf. Die Steuereinrichtung steuert die Ausgabevorrichtung derart, dass eine Ausgabe eines Bechers in die Bechereinstellkammer unterbleibt. Die Ausgabevorrichtung gibt dann in der zweiten geöffneten Stellung die Bechereinstellkammer und die Befüllvorrichtung für einen Nutzer zugänglich frei. Die Bechereinstellkammer ist derart ausgebildet, dass ein von einem Nutzer mitgebrachter Becher oder eine Tasse von dem Nutzer von außen zu der Befüllposition zuführbar ist. Somit wird es dem Nutzer ermöglicht seinen eigenen Becher oder seine eigene Tasse zu verwenden. Optional kann eine Sensorerkennungs- und Freigabeeinrichtung zum sensorischen Erkennen des zugeführten Bechers an der Befüllposition und zur Freigabe zum Befüllen des Bechers vorgesehen sein. Damit wird sichergestellt, dass das Getränk nicht ausgegeben wird, wenn sich kein Becher an der Befüllposition befindet oder wenn ein Becher nicht korrekt an der Befüllposition positioniert ist.

In einer weiteren Ausführungsform weist die Ausgabekammer eine flache Auflagefläche auf. Die Ausgabekammer und die Becherfänger sind derart ausgebildet, dass aus einem Becherwerk in eine Ausgabekammer ausgegebene Becher in der Ausgabekammer richtig positioniert werden und/oder verkippsicher auf der Auflagefläche stehen. Das gesamte Gewicht des Bechers wird dabei von der Auflagefläche getragen, sodass der Becher im Wesentlichen frei darauf steht. Die Becherfänger tragen den Becher nicht. Insbesondere verhindern sie lediglich das Verkippen des Bechers beim Bewegen der Ausgabevorrichtung. Dabei ist ein Spiel zwischen dem Becher und dem Becherfänger vorgesehen, sodass der stehende Becher den Becherfänger nur punktuell berührt oder nicht berührt.

In einer bevorzugten Ausführungsform ist die Ausgabevorrichtung in eine dritte geöffnete Stellung bewegbar. Die Ausgabevorrichtung weist eine erste und eine zweite Ausgabekammer auf. Die zweite Ausgabekammer ist der dritten geöffneten Stellung zugeordnet. Die Steuereinrichtung steuert die Ausgabevorrichtung derart, dass die Ausgabevorrichtung in der dritten geöffneten Stellung die zweite Ausgabekammer und die Befüllvorrichtung für einen Nutzer zugänglich freigibt. Somit wird die automatische Ausgabe von Bechern über zwei unterschiedliche Ausgabekammern ermöglicht. Dies ist insbesondere von Vorteil, wenn die Ausgabekammern verschieden, beispielsweise an die Anforderungen für die Ausgabe unterschiedlicher Getränke und/oder unterschiedlicher Becher angepasst, ausgebildet sind.

In einer weiteren bevorzugten Ausführungsform sind zumindest ein erstes und ein zweites Becherwerk vorgesehen. Das erste Becherwerk ist zur Bevorratung von ersten Bechern eines ersten Typs oder einer ersten Größe ausgebildet. Das zweite Becherwerk ist zur Bevorratung von zweiten Bechern eines zweiten Typs oder einer zweiten Größe ausgebildet. Das erste und das zweite Becherwerk weisen jeweils eine eigene Vereinzelungsvorrichtung auf oder weisen eine gemeinsame Vereinzelungsvorrichtung auf. Diese ist bzw. sind zur Ausgabe einzelner erster Becher in die erste Ausgabekammer und/oder einzelner zweiter Becher in die zweite Ausgabekammer ausgebildet. Somit können beim Öffnen der Ausgabevorrichtung verschiedene Typen oder Größen von Bechern an die Befüllposition transportiert werden. Wenn der Getränkeautomat zur Ausgabe unterschiedlicher Heißgetränkearten vorgesehen ist, ist somit auch eine Anpassung der Bechergröße an das jeweilige auszugebende Getränk realisierbar. Die erste Ausgabekammer ist entsprechend zur Aufnahme und Ausgabe erster Becher und die zweite Ausgabekammer zur Aufnahme und Ausgabe zweiter Becher ausgebildet. Die Anzahl unterschiedlicher Becher, Becherwerke, und Ausgabekammern kann auch drei oder mehr betragen, je nach Anforderung an die Vielfalt von Bechern des Getränkeautomaten. Beispielsweise kann eine kleine Bechergröße für die Ausgabe von Espresso und/oder eine mittlere Bechergröße zur Ausgabe von Filterkaffee und/oder Cappuccino und/oder eine dritte Bechergröße zur Ausgabe von Latte Macchiato und/oder großen Filterkaffee Portionen und/oder großen Cappuccino Portionen vorgesehen sein. Dementsprechend sind dann auch mehrere verschiedene, an die jeweiligen Bechergrößen angepasste, Becherwerke und Ausgabekammern in der Anzahl der unterschiedlichen Bechergrößen oder -typen vorgesehen.

Bei einer weiteren Ausführungsform sind das erste Becherwerk und das zweite Becherwerk dazu ausgebildet, jeweils eine unterschiedliche Anzahl von Becherstapeln zu bevorraten. Bevorzugt sind das erste und zweite Becherwerk derart ausgebildet, dass sowohl die ersten Becher als auch die zweiten Becher darin bevorratet werden können. Somit können das erste und das zweite Becherwerk vorteilhaft, je nach dem welcher Becher stärker nachgefragt wird, entsprechend bestückt werden. Alternativ ist es zur Kapazitätserhöhung auch möglich, beide Becherwerke mit gleichartigen, gleich großen oder identisch ausgebildeten Bechern zu bestücken. Insgesamt wird somit ein besonders flexibel einsetzbarer Getränkeautomat geschaffen, welcher je nach Nachfrage auf unterschiedlichste Art und Weise mit unterschiedlichen oder gleichen Bechern bestückt werden kann. Beispielsweise könnten das erste Becherwerk zur Aufnahme von 4 Becherstapeln und das zweite Becherwerk zur Aufnahme von 5 Becherstapeln ausgebildet und vorgesehen sein. Somit könnten bei zwei verschiedenen Bechertypen, beispielsweise kleineren und größeren Bechern, entweder vier Stapel mit großen Bechern im ersten Becherwerk und fünf Stapel mit kleinen Bechern im zweiten Becherwerk oder vier Stapel mit kleinen Bechern im ersten Becherwerk und fünf Stapel mit großen Bechern im zweiten Becherwerk bevorratet werden. Ferner könnten auch neun Stapel mit kleineren Bechern im ersten und zweiten Becherwerk oder neun Stapel mit größeren Bechern im ersten und zweiten Becherwerk bevorratet werden.

Gemäß einer vorteilhaften Ausführungsform ist eine steuerbare Reinigungseinrichtung vorgesehen. Die Reinigungseinrichtung ist von der Steuereinrichtung derart steuerbar, dass sie den Ausgabebereich und/oder die Befüllvorrichtung und/oder die Ausgabevorrichtung in der geschlossenen Stellung der Ausgabevorrichtung reinigt. Bevorzugt wird dabei durch Spülen mit heißem Wasser und/oder durch ausblasen mit Dampf gereinigt. Es können auch optional oder zusätzlich Reinigungsmittel verwendet werden. Somit sind der Ausgabebereich und/oder die Befüllvorrichtung und/oder die Ausgabevorrichtung des Getränkeautomaten nach jeder Benutzung wieder frisch reinigbar. Dadurch wird die Hygiene des Getränkeautomaten gewährleistet, auch wenn dieser nicht regelmäßig von Personal gereinigt wird. Dies ist ansonsten vor allem bei Bereitstellung von frischmilchhaltigen Heißgetränken an einem Getränkeautomaten notwendig, da hier die Hygiene und die mögliche Verkrustung problematisch sind. Mit der Reinigungseinrichtung wird folglich der Aufwand zur Instandhaltung und Pflege des Getränkeautomaten stark reduziert. Zudem werden die Hygiene und die Funktionssicherheit gesteigert.

Bei einer vorteilhaften Ausführungsform der Antriebsvorrichtung ist eine Arretiereinrichtung vorgesehen. Die Arretiereinrichtung arretiert die Antriebsscheibe in zumindest einer Position des Drehkarussells. Somit ist das gesamte Drehkarussell arretiert. Ein ungewolltes Bewegen des Drehkarussells, insbesondere durch Krafteinwirkung von außen, wird so wirkungsvoll verhindert.

In einer weiteren vorteilhaften Ausführungsform der Antriebsvorrichtung ist der Riemen als Zahnriemen ausgebildet. Die Arretiereinrichtung weist zumindest ein Zahnelement und eine feste Steuerscheibe auf. Das zumindest ein Zahnelement ist radial in der Steuerscheibe geführt. In Umfangsrichtung ist es linear in der Antriebsscheibe geführt. Die Steuerscheibe ist derart ausgelegt, dass das zumindest eine Zahnelement in der zumindest einen Position in den Zahnriemen eingreift. Damit steht die Antriebsscheibe in direkter Wirkverbindung mit dem Elektromotor. Der Elektromotor ist dabei vorteilhaft noch über eine selbsthemmende Kraftübertragung, wie z.B. einem Schneckengetriebe, mit dem Zahnriemen gekoppelt. Somit werden die Antriebsscheibe und damit das Drehkarussell mittels Selbsthemmung der Kraftübertragung bei stehendem Elektromotor arretiert.

Das Verfahren zum Betreiben eines Getränkeautomaten wird in einer bevorzugten Ausführungsform an einem erfindungsgemäßen Getränkeautomaten, insbesondere mit einer erfindungsgemäßen Antriebsvorrichtung und/oder einem erfindungsgemäßen Becherwerk durchgeführt.

In einer weiteren bevorzugten Ausführungsform des Verfahrens ist eine Steuervorrichtung zum Steuern der Antriebsvorrichtung und der Befüllvorrichtung vorgesehen. Die Steuervorrichtung steuert die Antriebsvorrichtung und die Befüllvorrichtung angepasst an das mittels des Eingabemoduls angeforderte Getränk.

Weitere bevorzugte Ausführungsformen des Verfahrens enthalten zumindest einen der folgenden Schritte: (a1) Lösen einer arretierten Antriebsvorrichtung nach Schritt (a) und vor Schritt (b); (c1) Arretieren der Antriebsvorrichtung nach Schritt (b) und vor Schritt (d); (d1) Lösen der Antriebsvorrichtung vor Schritt (e); (e1) Arretieren der Antriebsvorrichtung nach Schritt (e); (e2) Selbstreinigen der Ausgabevorrichtung und der Befüllvorrichtung nach Schritt (e).

Bei einer vorteilhaften Ausführungsform des Verfahrens ist das Eingabemodul derart vorgesehen, dass beim Anfordern eines Getränks als erste Alternative A1 das Befüllen eines mitgebrachten Bechers wählbar ist. Als zweite Alternative A2 ist das Befüllen eines aus einem Becherwerk über die Ausgabevorrichtung an die Befüllposition zugeführten Bechers wählbar. Bei einer Anforderung der ersten Alternative A1 erfolgt nach dem Schritt (c) ein Schritt (c2) des sensorischen Erkennens des zugeführten Bechers an der Befüllposition und die Freigabe zum Befüllen des Bechers durch eine Sensorerkennungs- und Freigabeeinrichtung. Bei einer Anforderung der zweiten Alternative A2 erfolgt vor dem Schritt (b) ein Schritt (b1) des Ausgebens eines Bechers aus dem Becherwerk in eine Ausgabekammer der Ausgabevorrichtung, wobei anschließend Schritt (b) und Schritt (c) gleichzeitig erfolgen, wobei Schritt (c) mittels der Ausgabevorrichtung ausgeführt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine isometrische Ansicht eines Getränkeautomaten mit einer Ausgabevorrichtung in geschlossener Stellung gemäß einem Ausführungsbeispiel der vorliegenden Erfindung;
- Fig. 2: eine isometrische Ansicht des Getränkeautomaten aus Fig. 1 mit der Ausgabevorrichtung in geöffneter Stellung;
- Fig. 3: eine Vorderansicht eines Getränkeautomaten mit einer Ausgabevorrichtung in geschlossener Stellung gemäß einem Ausführungsbeispiel der vorliegenden Erfindung;
- Fig. 4: eine isometrische Ansicht eines Drehkarussells in einer zweiten geöffneten Stellung gemäß einer Ausführungsform der vorliegenden Erfindung;
- Fig. 5: eine isometrische Ansicht eines Drehkarussells in einer Stellung, in der das Drehkarussell mit einem Becher aus einem Becherwerk bestückt wird;
- Fig. 6: eine isometrische Ansicht eines Drehkarussells in einer Position, in welcher ein Becher an der Befüllposition einer erfindungsgemäßen Ausgabevorrichtung angeordnet ist;
- Fig. 7: eine isometrische Ansicht einer erfindungsgemäßen Ausgabevorrichtung in einer zweiten geöffneten Stellung mit erhöhter Befüllposition gemäß einem Ausführungsbeispiel der vorliegenden Erfindung;
- Fig. 8: eine isometrische Ansicht des Drehkarussells aus Fig. 7 in einer Stellung, in der das Drehkarussell mit einem Becher aus einem Becherwerk bestückt wird;
- Fig. 9: eine isometrische Ansicht der Ausgabevorrichtung aus Fig. 8 in einer Position, in welcher der Becher an der Befüllposition angeordnet ist;
- Fig. 10: eine isometrische Ansicht eines Drehkarussells an dem Becherfänger vorgesehen sind, gemäß einer Ausführungsform der vorliegenden Erfindung;
- Fig. 11: eine Detailansicht des Übergangs zwischen dem Becherfänger und dem in dem Drehkarussell stehenden Becher aus Fig. 10;
- Fig. 12: eine isometrische Ansicht zweier einzelner Becherfänger und eines Bechers;
- Fig. 13: Draufsicht der Becherfänger und des Bechers aus Fig. 12;
- Fig. 14: eine Explosionsdarstellung einer erfindungsgemäßen Antriebsvorrichtung für ein Drehkarussell;
- Fig. 15: eine Darstellung der Anordnung eines Zahnelements in der Antriebsvorrichtung aus Fig. 14;
- Fig. 16: eine isometrische Ansicht von erfindungsgemäßen Becherwerken;
- Fig. 17: eine Draufsicht der Becherwerke aus Fig. 16;
- Fig. 18: Ein Ablaufdiagramm eines erfindungsgemäßen Verfahrens in einer ersten Alternative;
- Fig. 19: Ein Ablaufdiagramm eines erfindungsgemäßen Verfahrens in einer zweiten Alternative.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

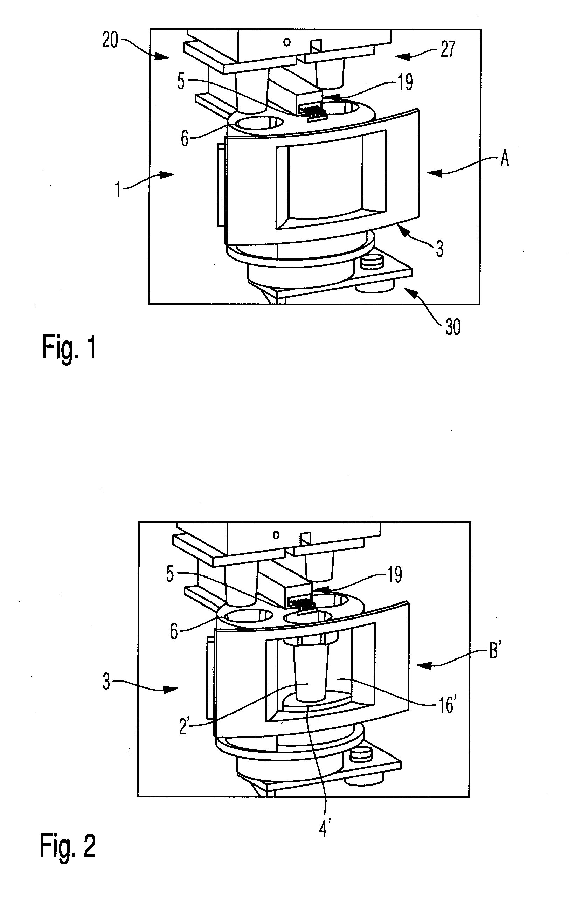

Fig. 1 zeigt eine isometrische Ansicht eines Getränkeautomaten 1 mit einer Ausgabevorrichtung 3 in geschlossener Stellung A gemäß einem Ausführungsbeispiel der vorliegenden Erfindung. Der Getränkeautomat 1 ist ohne Gehäuse dargestellt, was der besseren Übersichtlichkeit dienen soll. Der Getränkeautomat 1 enthält eine Antriebsvorrichtung 30, auf welche später noch im Detail eingegangen wird. Des Weiteren weist der Getränkeautomat 1 ein Becherwerk 20 mit einer Vereinzelungsvorrichtung 27 auf, auf welches ebenfalls später noch im Detail eingegangen wird. Die Ausgabevorrichtung 3 des Getränkeautomaten 1 ist unter Verwendung eines Drehkarussells 6 realisiert, welches in der dargestellten Stellung A geschlossen ist. Es ist eine Reinigungseinrichtung 19 vorgesehen, mittels welcher der Ausgabebereich, insbesondere das Drehkarussell 6 und die Befüllvorrichtung 5, in der geschlossenen Stellung A nach dem Ausgeben eines Getränks intern gereinigt wird. Die Reinigung erfolgt durch Spülen mit heißem Wasser und/oder durch Ausblasen mit Dampf. Dadurch, dass die Ausgabevorrichtung geschlossen ist, dringt dabei kein Wasser oder Dampf nach außen.
In Fig. 2 ist eine isometrische Ansicht des Getränkeautomaten 1 aus Fig. 1 dargestellt, wobei die Ausgabevorrichtung 3 in einer dritten geöffneten Stellung B' gezeigt wird. Innerhalb der Ausgabevorrichtung 3 ist eine Ausgabekammer 16' mit einer Befüllposition 4' dargestellt, an welcher ein Becher 2' positioniert ist. Oberhalb des Bechers 2' ist eine Befüllvorrichtung 5 angeordnet. Auf den Ablauf zwischen den beiden Stellungen A und B' wird im Folgenden noch detaillierter eingegangen. Der Becher 2' kann in der Stellung B' mittels der Befüllvörrichtung 5 mit einem Heißgetränk oder einem flüssigen Lebensmittel befüllt werden. In dieser geöffneten Stellung B' ist die Befüllposition 4' von außen zugänglich, sodass der Becher 2' anschließend von einem Benutzer entnommen werden kann.

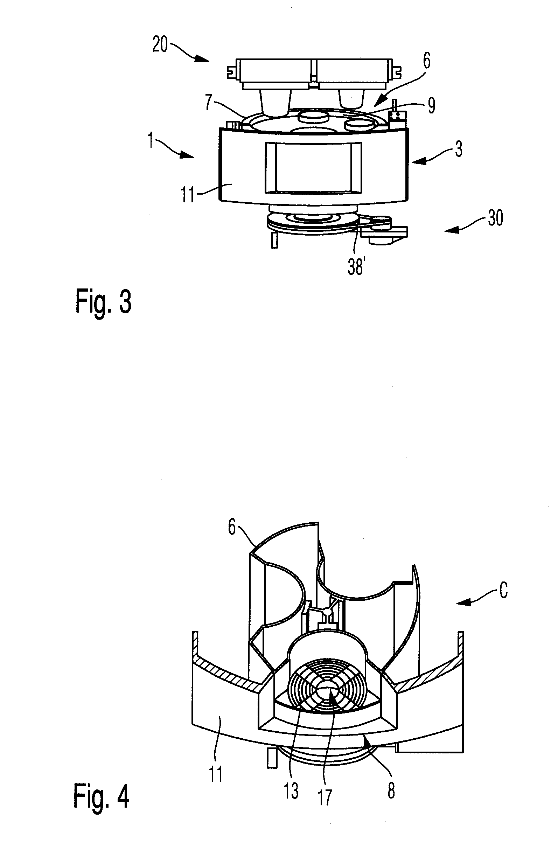

Fig. 3 zeigt ein weiteres Ausführungsbeispiel eines erfindungsgemäßen Getränkeautomaten 1. Der Getränkeautomat 1 ist hier in einer Vorderansicht mit einer Ausgabevorrichtung 3 mit einem Drehkarussell 6 in geschlossener Stellung dargestellt. Eine Befüllvorrichtung 5 ist in diesem Ausführungsbeispiel zur besseren Übersichtlichkeit nicht dargestellt. Auf Fig. 3 wird zu einem späteren Zeitpunkt nochmals bezüglich der Antriebsvorrichtung 30 Bezug genommen. Des Weiteren ist in Fig. 3 ein Außenzylinder 7 des Drehkarussells 6 dargestellt. Der Außenzylinder 7 bildet eine Umfangswand 9 des Drehkarussells 6 und ist mit nicht dargestellten Ausnehmungen zumindest an der Ausgabekammer ausgebildet. Alternativ kann auch auf den Außenzylinder 7 verzichtet werden und nur abschnittsweise eine Umfangswand 9 an dem Drehkarussell 6 vorgesehen sein. Direkt vor dem Außenzylinder 7 ist eine Blende 11 vorgesehen.
Fig. 4 zeigt eine isometrische Ansicht eines Drehkarussells 6 in einer zweiten geöffneten Stellung C, gemäß einer Ausführungsform der vorliegenden Erfindung. Der Stellung C ist eine Bechereinstellkammer 17 zugeordnet. Des Weiteren ist eine Blende 11 der Ausgabevorrichtung 3 dargestellt, welche eine Ausgabeöffnung 8 aufweist. Das Drehkarussell 6 weist eine flache Auflagefläche 13 auf, auf welchem ein in die Ausgabevorrichtung 3 eingebrachter Becher stehen kann.

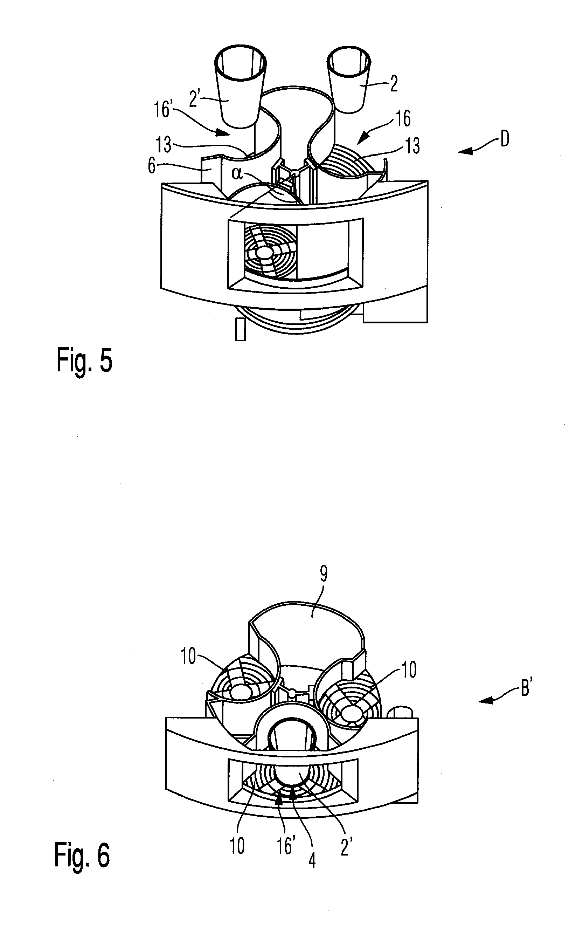

In Fig. 5 ist eine isometrische Ansicht eines erfindungsgemäßen Drehkarussells 6 in einer Stellung D, in der das Drehkarussell mit einem Becher 2, 2' aus einem Becherwerk 20 bestückt wird, dargestellt. Exemplarisch sind zwei Positionen angedeutet, in welchen ein Becher 2 oder 2' in eine Ausgabekammer 16 oder 16' des Drehkarussells 6 ausgegeben werden kann. Die Becher 2, 2' sind lediglich zur Positionsangabe abgebildet und sind kein Teil des Drehkarussells 6 selbst. In der dargestellten Stellung wurde das Drehkarussell 6 aus der geschlossenen Stellung A um einen geringen Winkel α gegen den Uhrzeigersinn gedreht, um die Aufnahmeflächen 13 an einer Position anzuordnen, an welcher ein aus einem Becherwerk 20 ausgegebener Becher 2, 2' in das Drehkarussell derart eingebringbar ist, dass er anschließend auf einer der flachen Aufnahmeflächen 13 steht.
In Fig. 6 ist eine isometrische Ansicht eines erfindungsgemäßen Drehkarussells 6 in einer dritten geöffneten Stellung B', in welcher ein Becher 2' an der Befüllposition angeordnet ist, dargestellt. Das Drehkarussell 6 ist hier in einer Ansicht dargestellt, in der die abschnittsweise vorgesehene Umfangswand 9 und die Ausnehmungen 10 der Umfangswand 9 deutlich erkennbar sind. Bevor dem Bewegen in die dargestellte dritte geöffnete Stellung B' wurde in der Stellung D aus Fig. 5 ein Becher 2' in die zweite Ausgabekammer 16' ausgegeben. Beim Bewegen des Drehkarussells aus der in Fig. 5 dargestellten Stellung D in die Stellung B' hat es die zweite geöffnete Stellung C bei einer Drehung gegen den Uhrzeigersinn durchfahren. Das Drehkarussell steht, wie dargestellt, in seiner dritten geöffneten Stellung B', in welcher eine zweite Ausgabekammer 16' und somit der Becher 2' für einen Benutzer zugänglich ist. Zum Anfahren der ersten geöffneten Stellung B, in welcher die erste Ausgabekammer 16 zugänglich ist, hätte das Drehkarussell 6 in der Stellung D aus Fig. 5 mit dem Uhrzeigersinn gedreht werden müssen. Anstatt des in Fig. 6 dargestellten Bechers 2' wäre dann ein Becher 2 aus Fig. 5 in die erste Ausgabekammer 16 anstatt in die zweite Ausgabekammer 16' ausgegeben worden und folglich auch anstatt des Bechers 2' an der Befüllposition 4 angeordnet.

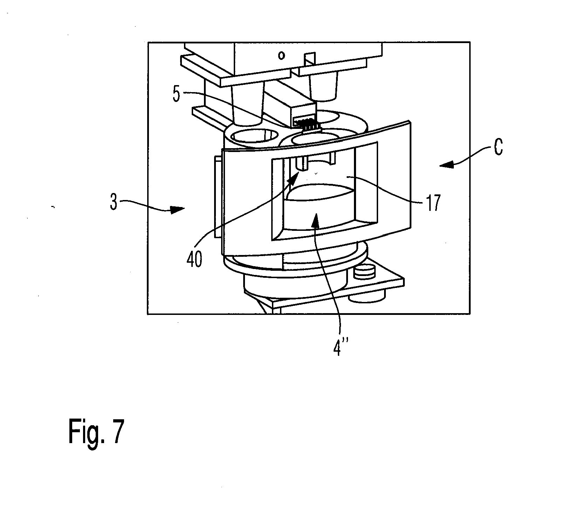

In Fig. 7 ist eine isometrische Ansicht des Drehkarussells 6 in einer zweiten geöffneten Stellung C mit einer erhöhten Befüllposition 4'', z.B. für niedrige Tassen, gemäß einem weiteren Ausführungsbeispiel der vorliegenden Erfindung dargestellt. Die Darstellung in Fig. 7 entspricht im Wesentlichen der in Fig. 4 dargestellten Stellung C des Drehkarussells 6. Die dargestellte zweite geöffnete Stellung C ist dadurch charakterisiert, dass eine externe, z.B. von einem Benutzer selbst mitgebrachte, Tasse von außen in die Bechereinstellkammer 17 der Ausgabevorrichtung 3 an die Befüllposition 4'' einstellbar und mittels der Befüllvorrichtung 5 befüllbar ist. Mittels der erhöhten Befüllposition 4" wird z. B. ein Spritzen des auszugebenden Getränks über den, gegenüber einem Becher niedrigeren, Tassenrand vermieden. Dies wird unter anderem dadurch realisiert, dass das Getränk mit einer kleineren Fallhöhe in die Tasse ausgegeben wird. Des Weiteren ist eine Sensorerkennungs- und Freigabeeinrichtung 40 vorgesehen, welche eine Positionierung der Tasse an der Befüllposition 4'' sensorisch erkennt und die Befüllvorrichtung zum Befüllen erst freigibt, wenn sich eine Tasse an der Befüllposition 4'' befindet. Wenn sich keine Tasse an der Befüllposition 4'' befindet, wird die Befüllvorrichtung 5 nicht freigegeben und so eine Ausgabe neben die Tasse bzw. ins Leere vermieden.

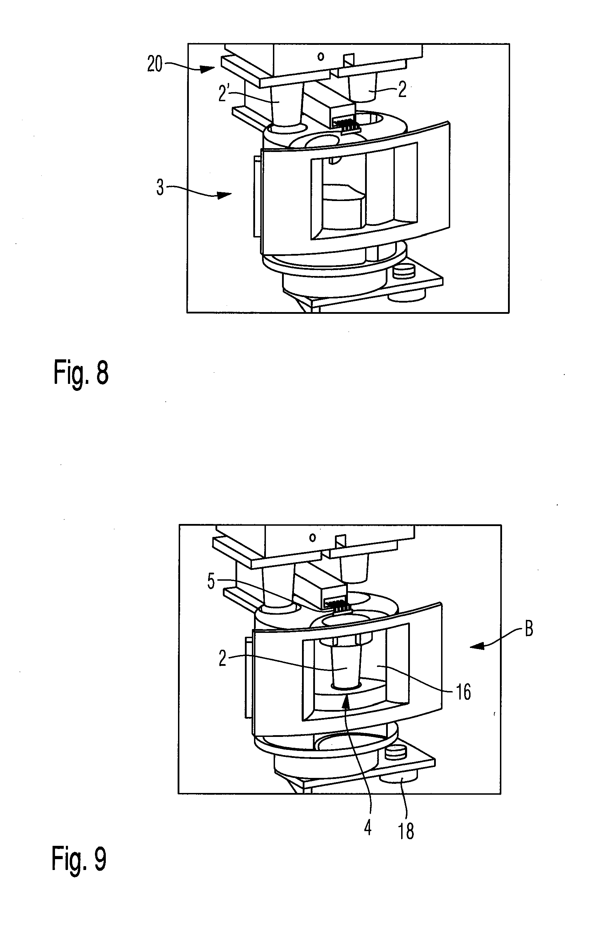

Fig. 8 zeigt eine isometrische Ansicht der Ausgabevorrichtung 3 aus Fig. 7 in einer Stellung D der Ausgabevorrichtung, die der Stellung des Drehkarussells in Fig. 5 entspricht. Ein Becherwerk 20 stellt die Becher 2, 2' bereit, welche in der dargestellten Position in die Ausgabevorrichtung 3 ausgegeben werden können.
In Fig. 9 ist eine erste geöffnete Stellung B der Ausgabevorrichtung aus Fig. 8 dargestellt, in welcher sich der Becher 2 an der Befüllposition 4 befindet. Der Becher 2 ist kleiner als der Becher 2' und größer als eine Tasse. Im Unterschied zu der Befüllposition 4'' aus Fig. 7 ist die Befüllposition 4 in Fig. 9 aufgrund der gegenüber einer Tasse größeren Becherhöhe des Bechers 2 etwas tiefer unterhalb der Befüllvorrichtung 5 angeordnet. Die erste Ausgabekammer 16 ist somit hinsichtlich ihrer Höhe genau an die Bechergröße des Bechers 2 angepasst ausgebildet. Die analog an die Bechergröße des größeren Bechers 2' angepasste zweite Ausgabekammer 16' ist in Fig. 2 dargestellt und weist eine noch tiefer angeordnete Befüllposition 4' auf.

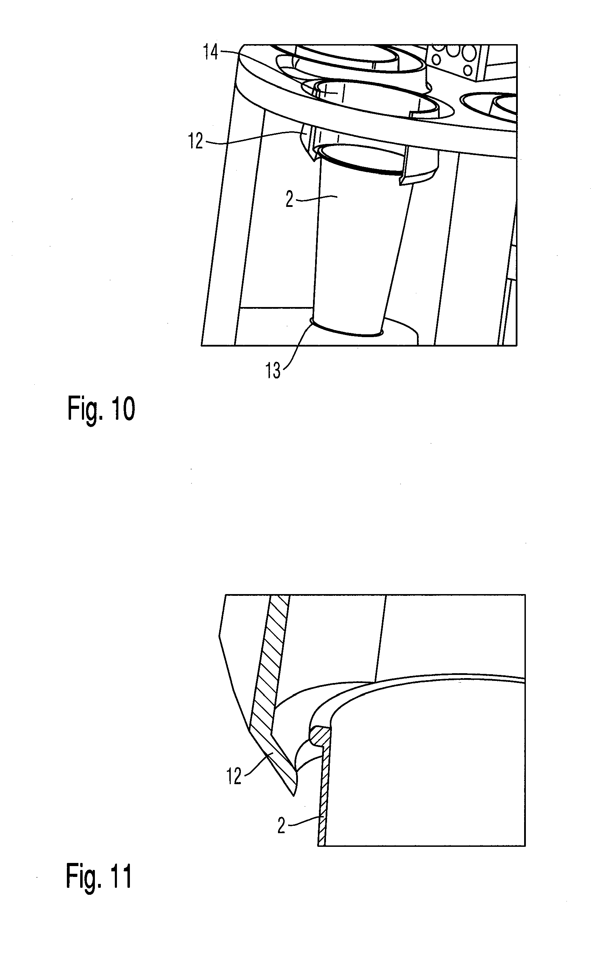

Fig. 10 zeigt eine isometrische Ansicht eines Drehkarussells 6, an welchem Becherfänger 12 vorgesehen sind, gemäß einem Ausführungsbeispiel der vorliegenden Erfindung. Die Becherfänger 12 dienen dem Führen und verkippsicheren Positionieren eines Bechers 2, beim Ausgeben des Bechers 2 aus einem Becherwerk 20 in eine Ausgabekammer 16, 16' des Drehkarussells 6. Das Ausgeben des Bechers 2 aus dem Becherwerk 20 in die Ausgabevorrichtung 3 erfolgt mittels Schwerkraftwirkung, wodurch der Becher 2, nachdem er vereinzelt wurde, in den Becherfänger 12 hinein fallengelassen wird. Der Becher 2 tritt zuerst mit seinem Boden in den Becherfänger 12 ein, und wird entlang der Wände der Führungselemente 14 des Becherfängers 12 geführt und letztlich mit dem zulaufenden unteren Rand des Becherfängers 12 zentriert. Der Becherboden trifft dann auf die flache Auflagefläche 13 der Ausgabekammer 16, 16' auf. In dem Moment des Auftreffens wird der Becher von dem Becherfänger 12, insbesondere dem unteren Rand des Becherfängers 12, an einem Verkippen gehindert. Wenn der Becher 2 in seiner endgültigen Position auf der flachen Auflagefläche 13 steht, wird er von dem Becherfänger 12 nicht getragen. Vielmehr steht der Becher dann vollständig auf der Auflagefläche 13. Der Becherfänger 12 ist derart gestaltet, dass ein Benutzer den Becher 2, ohne diesen stark zusammendrücken zu müssen, aus dem Becherfänger 12 herausnehmen kann. Dazu ist eine große Ausnehmung an dem Becherfänger 12 vorgesehen. Das Herausnehmen eines Bechers aus einem Becherfänger 12 kann in der ersten oder in der dritten geöffneten Stellung B bzw. B' der Ausgabevorrichtung 3 erfolgen.
Fig. 11 zeigt eine Detailansicht des Übergangs zwischen dem Becherfänger 12 und dem im Drehkarussell 6 stehenden Becher 2. Darin ist detailliert erkennbar, dass der Becherfänger 12 einen gewissen Abstand zu dem auf der Auflagefläche 13 stehenden Becher 2 aufweist und der Becherfänger 12 den Becher 2 somit nicht trägt. Vielmehr steht der Becher vollständig auf der Auflagefläche 13 bevorzugt derart, dass die Mundrolle des Bechers 2 den Becherfänger 12 wie dargestellt nicht berührt.

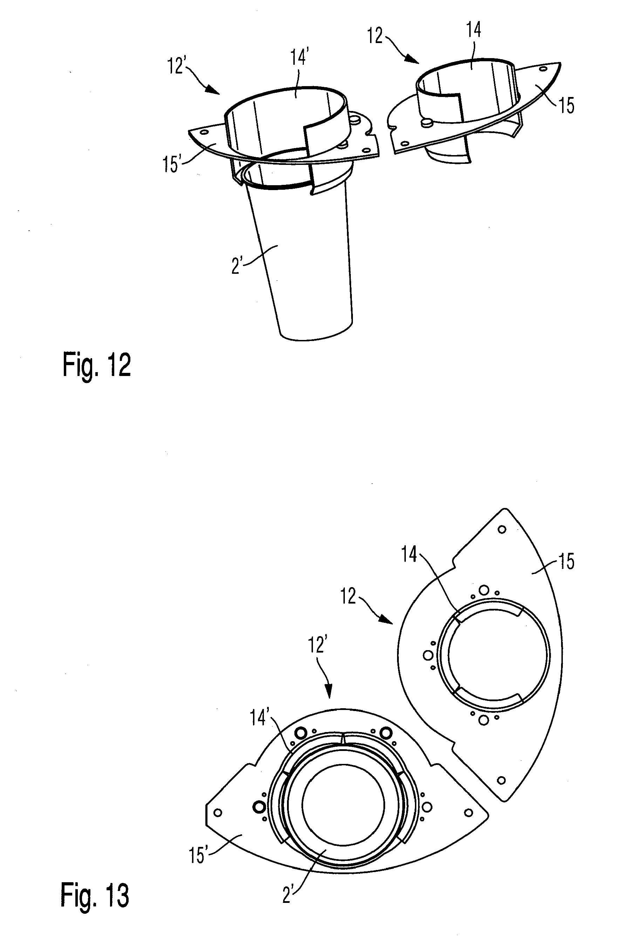

Fig. 12 zeigt eine isometrische Ansicht zweier einzelner Becherfänger 12, 12' und eines Bechers 2'. Die beiden Becherfänger 12 und 12' sind für Becher 2, 2' unterschiedlicher Größe ausgelegt. Der Becherfänger 12' ist zur Aufnahme größerer Becher 2' ausgelegt und der Becherfänger 12 ist zur Aufnahme kleinerer Becher 2 ausgelegt. Die Becherfänger 12 und 12' können in der dargestellten Weise in einem Drehkarussell 6 angeordnet sein. Ihr Abstand zueinander entspricht dem Abstand entsprechender Vereinzelungsvorrichtungen der Becherwerke 20, 20' bzw. aus den Becherwerken 20, 20' ausgegebener Becher 2, 2'. Die Darstellung des Bechers 2' dient hier lediglich der Erläuterung der Funktionsweise und ist nicht derart zu verstehen, dass der Becher 2' in dem Becherfänger 12' hängt. Vielmehr steht der Becher 2' auf der nicht dargestellten flachen Auflagefläche 13. Die Becherfänger 12, 12' enthalten jeweils einen Adaptionsring 15, 15' und Führungselemente 14, 14'. Die Führungselemente 14, 14' sind in einer Ausnehmung des Adaptionsrings 15 senkrecht zu dessen Ausdehnungsrichtung angeordnet. Der Innendurchmesser der Führungselemente 14' ist zur Aufnahme eines größeren Bechers 2' ausgebildet. Die Führungselemente 14 sind zur Führung eines kleineren Bechers 2 ausgebildet. Die Durchmesser bzw. Ausbildungen der Ausnehmungen der Adaptionsringe 15, 15' sind entsprechend an die Dimensionierung der jeweiligen Führungselemente 14 bzw. 14' angepasst.
Fig. 13 zeigt eine Draufsicht der Becherfänger 12, 12' und des Bechers 2' aus Fig. 12. Die halbkreisförmige Anordnung der zwei Becherfänger 12, 12' nebeneinander entspricht ihrer Anordnung in einer Hälfte des Drehkarussells 6.

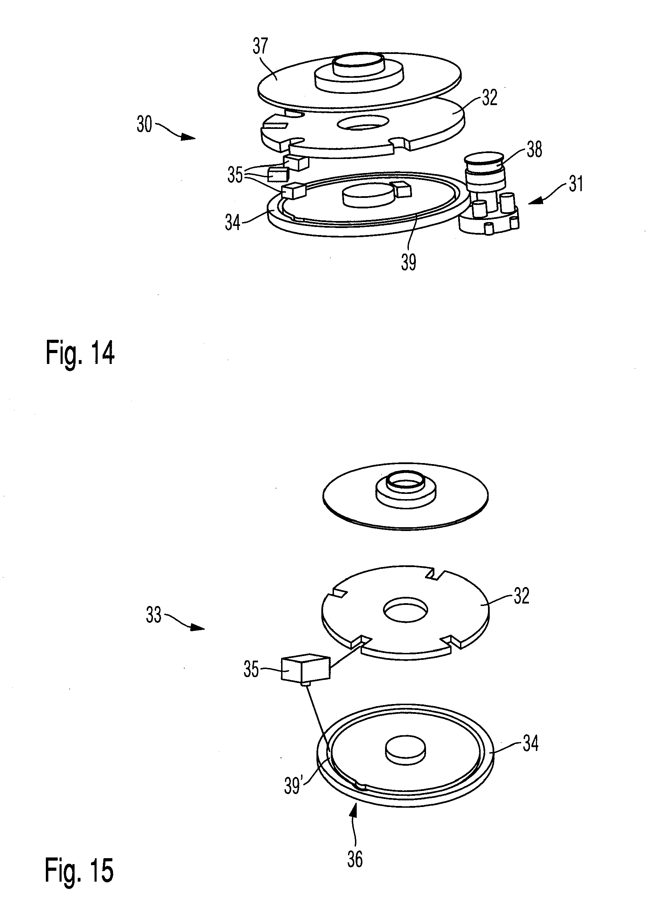

Fig. 14 zeigt eine Explosionsdarstellung einer erfindungsgemäßen Antriebsvorrichtung 30 für ein Drehkarussell 6. Die Antriebsvorrichtung 30 enthält eine Koppelplatte 37, eine Antriebsscheibe 32, eine Steuerscheibe 34 sowie eine Vielzahl von Zahnelementen 35. Die Koppelplatte 37 dient der Anbindung der Antriebsvorrichtung 30 an das Drehkarussell 6. Die Antriebsscheibe 32 weist einen glatten Rand auf und wird über einen nicht dargestellten, auf ihrem Rand laufenden, Zahnriemen 38' von dem Elektromotor 31 angetrieben. An dieser Stelle wird auf Fig. 3 verwiesen, in welcher die Antriebsvorrichtung 30 in der Einbauanordnung dargestellt ist und in welcher auch der Zahnriemen 38' dargestellt ist. Der Zahnriemen 38' läuft ferner auf dem Zahnrad 38, welches die Rotation des Elektromotors 31 auf den Zahnriemen 38' überträgt und somit die Antriebsscheibe 32 antreibt. Aufgrund dessen, dass das Zahnrad 38 mit den Zähnen des Zahnriemens 38' in Eingriff steht, ist der Zahnriemen 38' mit dem Elektromotor 31 direkt wirkverbunden. Wenn beim Antreiben des Drehkarussells 6 über die Antriebsscheibe 32 ein Widerstand auftritt, rutscht der Zahnriemen 38' somit auf dem zahnlosen Rand der Antriebsscheibe 32 durch. Dies geschieht immer dann, wenn das Widerstandsmoment größer als das durch Reibungskräfte auf den zahnlosen, glatten Rand der Antriebsscheibe 32 über den Zahnriemen 38' übertragbare Reibmoment ist. Der Reibschluss zwischen dem Zahnriemen 38' und der Antriebsscheibe 32 begrenzt somit das maximale Antriebsmoment des Drehkarussells. Dies ist insbesondere aus Sicherheitsgründen erforderlich, da an einem Getränkeautomaten 1 beispielsweise Körperteile eines Benutzers in der Ausgabevorrichtung nicht stark eingeklemmt werden dürfen. Mit der erfindungsgemäßen Antriebsvorrichtung würde in diesem Fall das übertragene Reibmoment klein genug sein, um den Benutzer nicht zu verletzen. Somit wird eine verletzungssichere Funktionsweise der Ausgabevorrichtung 3 bzw. des Drehkarussells 6 gewährleistet. Die Zahnelemente 35 und die Steuerscheibe 34 dienen der Arretierung des Drehkarussells in gewissen Stellungen. Solche Stellungen sind z.B. die geschlossene Stellung A oder die geöffneten Stellungen B, B' oder C sowie die Stellung D des Drehkarussells 6, in welchen das Drehkarussell 6 nicht von außen drehbar sein soll. Aufgrund dessen, dass lediglich ein Reibschluss zwischen der Antriebsscheibe 32 und dem Zahnriemen 38' herrscht, könnte das Drehkarussell 6 bei stehendem Elektromotor von außen verdreht werden, indem ein Moment von außen an das Drehkarussell 6 angelegt wird, welches höher als das Haftreibmoment zwischen dem Zahnriemen 38' und der Antriebsscheibe 32 ist. Dies wird verhindert, indem die Zahnelemente 35 und die Steuerscheibe 34 derart ausgebildet sind, dass beispielsweise in der geschlossenen Stellung A die Zahnelemente 35 in radialer Richtung aus der Antriebsscheibe 32 heraus nach außen gefahren werden, um mit ihren Zähnen in Eingriff mit dem Zahnriemen 38' zu gelangen. Dieses radiale Verschieben wird mittels der Steuerscheibe 34 realisiert, in welcher eine umlaufende Steuernut 39 vorgesehen ist. Die Steuernut 39 verläuft nicht komplett ringförmig, sondern mit Ausbuchtungen 36 an den gewünschten Positionen. An den Zahnelementen 35 sind an der Unterseite der Zahnelemente 35 Führungsbolzen vorgesehen, welche in der Steuernut 39 der Steuerscheibe 34 laufen. Die Steuerscheibe 34 ist feststehend und wird nicht mit dem Drehkarussell 6 mitgedreht. Gelangt ein Führungsbolzen eines Zahnelementes 35 beim Drehen der Antriebsscheibe 32 an eine Ausbuchtung 36, folgt das Zahnelement 35 aufgrund der Führung in Umfangsrichtung durch die Steuerscheibe 34 der Ausbuchtung 36 in radialer Richtung nach außen und greift so in den Zahnriemen 38' ein. Wenn die Antriebsscheibe 32 in dieser Stellung angehalten wird, steht sie mit dem Zahnriemen 38' über die Zahnelemente 35 in Eingriff und wird somit über das Zahnrad 38 direkt mit dem Elektromotor 31 wirkverbunden und somit arretiert. In diesem Zustand müsste, um das Drehkarussell 6 zu drehen, das Widerstandsmoment des Elektromotors 31, der ggf. ein selbsthemmendes Schneckengetriebe aufweist, überwunden werden. Somit sind die Antriebsscheibe und damit das Drehkarussell 6 bei stehendem Elektromotor in dieser Stellung arretiert. Zum Lösen der arretierten Antriebsvorrichtung wird der Elektromotor einfach weitergedreht. Dadurch werden die Zahnelemente beim weiteren Drehen der Antriebsscheibe 32 mittels der Steuernut 39 wieder in die Antriebsscheibe geführt.

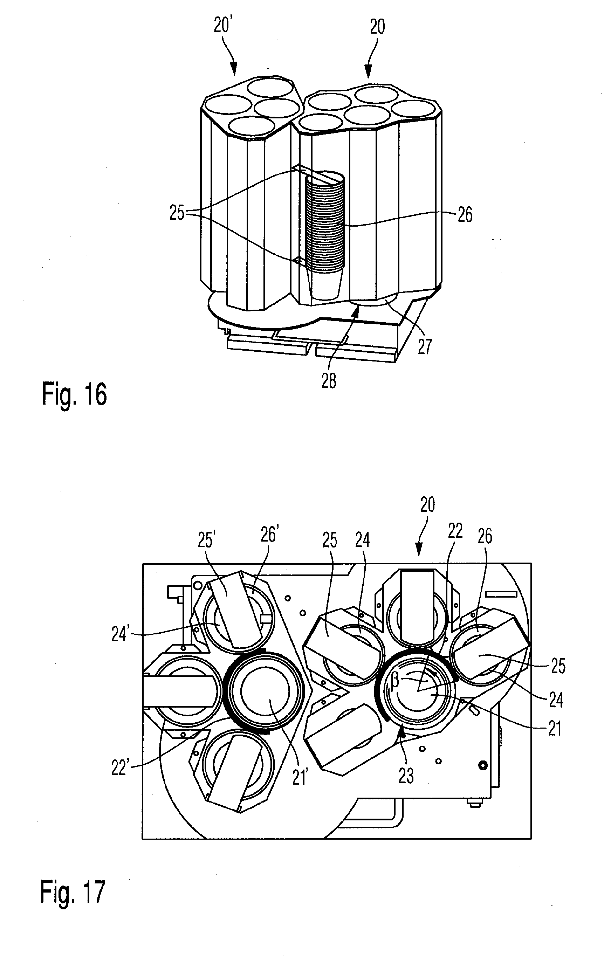

In Fig. 16 ist eine isometrische Ansicht eines erfindungsgemäßen Becherwerks 20 dargestellt. Genauer handelt es sich um zwei Becherwerke 20 und 20', welche nebeneinander angeordnet sind. Das Becherwerk 20 ist zur Bevorratung und zur Ausgabe von kleineren Bechern 2 ausgebildet und das Becherwerk 20' ist zur Bevorratung und Ausgabe größerer Becher 2' ausgebildet. Die Ausgabe der Becher 2, 2' erfolgt bei beiden Becherwerken 20, 20' jeweils in die Ausgabevorrichtung 3 derart, dass die Becher 2, 2' von den jeweiligen Becherfängern 12, 12' derart geführt und zentriert werden, dass sie hinterher gerade auf der flachen Auflagefläche 13 des Drehkarussells 6 stehen. Das Becherwerk 20, 20' weist eine Vereinzelungsvorrichtung 27 und eine Steuervorrichtung 28 auf. Der Aufbau und die Funktionsweise von Vereinzelungsvorrichtungen zum Vereinzeln von Bechern aus Becherstapeln sind dem Fachmann allgemein bekannt und werden daher im Rahmen der vorliegenden Beschreibung nicht näher erläutert. Die Becherwerke 20 und 20' weisen jeweils mehrere Vorratskammern 24 auf, in welchen Becherstapel 26 vorgehalten werden. Becherstapel 26 enthalten eine Vielzahl ineinander gestapelter Becher 2, 2'. In Fig. 16 ist exemplarisch ein schematischer Becherstapel 26 eingezeichnet. Der Becherstapel 26 wird von den Federn 25 gegen die Vereinzelungskammer, um welche die Vorratskammern angeordnet sind, gedrückt.
In Fig. 17 ist eine Draufsicht der Becherwerke 20, 20' aus Fig. 16 dargestellt. Darin ist erkennbar, dass die Becherwerke 20 und 20' jeweils eine Vereinzelungskammer 21 bzw. 21' aufweisen und um die Vereinzelungskammer 21, 21' etwa halbkreisförmig angeordnete Vorratskammern 24, 24' vorgesehen sind. Innerhalb der Vorratskammern 24, 24' werden Becherstapel 26, 26' mittels der Federn 25 gegen eine hülsenartig um die Vereinzelungskammern 21, 21' verlaufende Halbschale 22, 22' gedrückt. Diese Halbschale 22, 22' ist eine um die Vereinzelungskammer 21, 21' rotierbar ausgebildete Hülse mit einer großen Ausnehmung 23. Wenn die in der Vereinzelungskammer 21, 21' bevorrateten Becherstapel 26, 26' aufgebraucht sind, wird die Halbschale 22, 22' derart von der Steuervorrichtung 28 gesteuert, dass sie sich um einen gewissen Winkel β verdreht, sodass ein Becherstapel 26, 26' nicht mehr gegen die Halbschale 22, 22' drückt, sondern mittels der Federkraft der Federn 25 durch die Ausnehmung 23 der Hülse in die Vereinzelungskammer 21, 21' geschoben wird. Anschließend bewegt sich die Schale 22, 22' wieder in ihre Ausgangsposition, sodass der Becherstapel mittels der Halbschale 22, 22' korrekt positioniert wird. In der dargestellten Ausführungsform stehen für das Becherwerk 20 vier Becherstapel 26 in vier vorzugsweise gleichartigen Vorratskammern 24 bereit und in dem Becherwerk 20' drei Becherstapel 26' in drei Vorratskammern 24'. Selbstverständlich kann die Anzahl der Vorratskammern 24, 24' auch variiert werden.

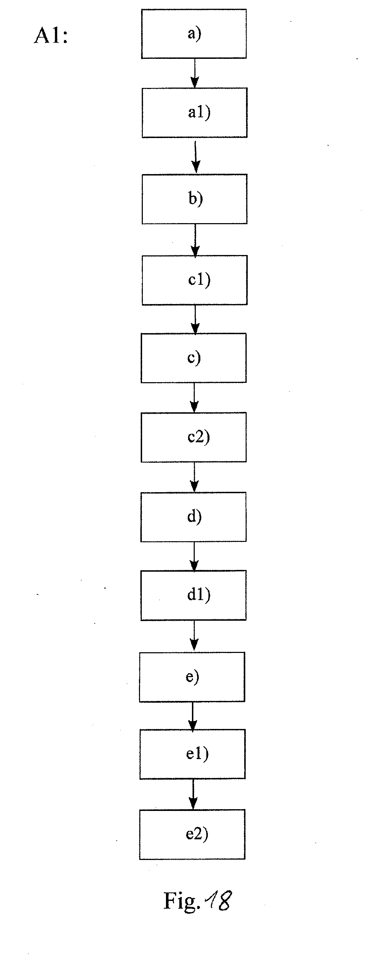

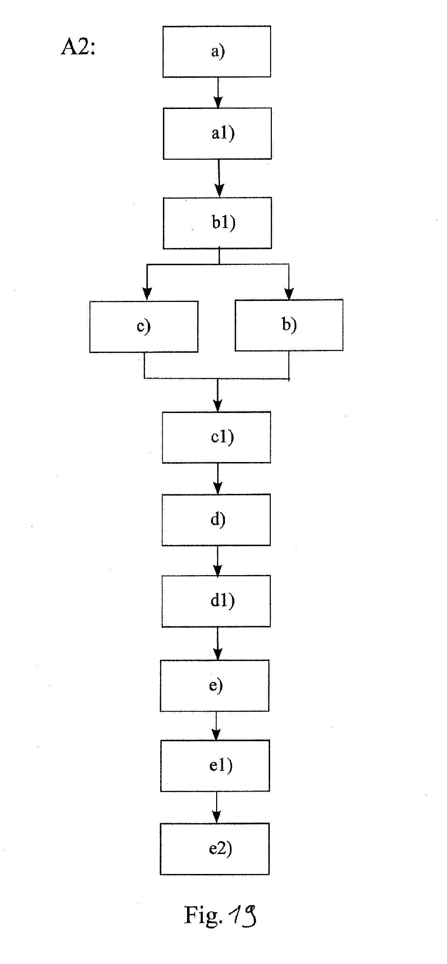

In Fig. 18 und Fig. 19 ist ein jeweils ein Ablaufdiagramm eines erfindungsgemäßen Verfahrens in einer ersten Alternative A1 in Fig. 18 und in einer zweiten Alternative A2 in Fig. 19 dargestellt. Das Verfahren dient dem Betreiben eines Getränkeautomaten. Beide Alternativen des Verfahrens sind mit einem erfindungsgemäßen Getränkeautomaten, insbesondere mit einer erfindungsgemäßen Antriebsvorrichtung und/oder einem erfindungsgemäßen Becherwerk durchführbar. Die erste Alternative A1 ist ein Verfahren, bei welchem ein von einem Benutzer mitgebrachter Becher befüllt wird. Die zweite Alternative A2 ist ein Verfahren, bei welchem ein Becher aus einem Becherwerk über die Ausgabevorrichtung zugeführt und anschließend befüllt wird. In einem ersten Schritt a) wird dazu ein Getränk mittels eines benutzerbedienbaren Eingabemoduls angefordert. Dabei wird zwischen den Alternative A1 und A2 gewählt. In einem zweiten Schritt a1) wird eine arretierte Antriebsvorrichtung gelöst. In einem weiteren Schritt b) wird eine Ausgabevorrichtung unter Verwendung einer Antriebsvorrichtung bewegt. Das Lösen der Arretierung in Schritt a1) erfolgt vorzugsweise durch Antreiben der Antriebsscheibe, welche, wie in Hinblick auf Fig. 14 und 15 beschrieben, in Abhängigkeit des Drehwinkels Zahnelemente über eine Steuerscheibe deaktiviert bzw. aktiviert. In diesem Falle werden Schritte a1) und b)gemeinsam durchgeführt. Bei der Alternative A2 wird vor dem Schritt b) noch ein Schritt b1) des Ausgebens eines Bechers aus einem Becherwerk in eine Ausgabekammer der Ausgabevorrichtung durchgeführt. Vorzugsweise fährt die Ausgabevorrichtung dazu, wie in Hinblick auf die Fig. 5 und Fig. 8 beschrieben, in eine Position D, in der sie mit einem Becher aus einem Becherwerk bestückbar ist. Bei Schritt b) wird die Ausgabevorrichtung aus einer geschlossenen Stellung, in der eine Befüllvorrichtung des Getränkeautomaten einem Benutzer unzugänglich versperrt ist, in eine geöffnete Stellung, in welcher die Befüllvorrichtung dem Benutzer zugänglich freigegeben ist, bewegt. Bei Alternative A2 wird dabei gleichzeitig der Schritt c) des Zuführens eines Bechers an eine Befüllposition an der Befüllvorrichtung durchgeführt. Anschließend wird der Schritt c1), bei dem die Antriebsvorrichtung in der geöffneten Position wieder arretiert wird, durchgeführt. Im Unterschied zur Alternative A2 wird bei der Alternative A1 der Schritt c) des Zuführens eines Bechers an die Befüllposition erst nach dem Schritt c1) durchgeführt. Der Schritt c) kann bei der Alternative A1 auch von einem Benutzer ausgeführt werden. Dann wird bei der Alternative A1 noch ein Schritt c2) des sensorischen Erkennens des zugeführten Bechers an der Befüllposition und die Freigabe zum Befüllen des Bechers durch eine Sensorerkennungs- und Freigabeeinrichtung 40 durchgeführt, um das Getränk sicher in den Becher und nicht daneben auszugeben. Der Weitere Verfahrensablauf ist dann für beide Alternativen A1 und A2 gleich. Es folgt ein Schritt d) des Befüllens des Bechers mittels der Befüllvorrichtung. Danach kann der Becher dann direkt von der Befüllposition entnommen werden. Anschließend wird in Schritt d1) die Antriebsvorrichtung gelöst und in Schritt e) die Ausgabevorrichtung mittels der Antriebsvorrichtung in die geschlossene Stellung bewegt, nachdem der befüllte Becher entnommen wurde. Danach wird mit dem Schritt e1) die Antriebsvorrichtung wieder arretiert und abschließend in einem letzten Schritt e2) eine Selbstreinigung des Ausgabebereichs und/oder der Befüllvorrichtung und/oder der Ausgabevorrichtung durchgeführt.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Die Stellung D, in der das Drehkarussell mit einem Becher aus einem Becherwerk bestückt wird, ist nicht in jedem Fall notwendig. Lediglich in den Konfigurationen der Erfindung, in welchen die Ausgabekammern des Ausgabevorrichtung so angeordnet sind, dass sie sich in der geschlossenen Stellung nicht bereits an der Vereinzelungsvorrichtung des Becherwerks befinden, muss das Drehkarussell zur Ausgabe eines Bechers in eine gesonderte Stellung D bewegt werden. Die Ausgabevorrichtung kann alternativ auch so vorgesehen sein, dass die Ausgabekammern sich in der geschlossenen Stellung bereits direkt an der Vereinzelungsvorrichtung des Becherwerks befinden, sodass die Ausgabevorrichtung zu diesem Zweck nicht bewegt werden muss.

Eine Ausgabevorrichtung kann auch in zumindest zwei Freiheitsgraden bewegbar sein. Beispielsweise könnte ein Drehkarussell zusätzlich höhenverschiebbar sein. Damit kann beispielsweise der Weg, den ein Becher beim Ausgeben aus dem Becherwerk in die Ausgabevorrichtung herunterfällt stark verringert werden, indem die Ausgabevorrichtung noch oben fährt und den Becher sozusagen herunter trägt. Eine Linearfördereinrichtung könnte ebenfalls zusätzlich höhenverschiebbar als x-y Fördereinrichtung vorgesehen sein

Es ist auch denkbar, dass zwei oder mehr Ausgabevorrichtungen vorgesehen sind. Beispielsweise könnten eine Ausgabevorrichtung mit einem Karussell und eine Ausgabevorrichtung mit einer Linearfördereinrichtung vorgesehen sein. Es könnten auch zwei Karusselle oder zwei Linearfördereinrichtungen vorgesehen sein.

Alternative Antriebsmechanismen können ihre Einklemmschutzwirkung beim Antrieb des Drehkarussells alternativ oder zusätzlich zu einem Reibschluss mittels eines Schutzschalters und/oder mittels einer Lichtschranke und/oder dergleichen realisieren.

Der Reibschluss der Antriebsvorrichtung kann auch an angestellten und/oder gekrümmten Flächen erfolgen. Beispielsweise kann das Antriebsrad auch als Doppelkegelrad ausgebildet sein und der Riemen entsprechend angestellte Flanken zum Übertragen des Reibmoments aufweisen.

Des Weiteren können die Steuereinrichtung des Getränkeautomaten und die Steuervorrichtung des Becherwerks miteinander integriert ausgebildet sein.

Bei einem Becherfänger handelt es sich insbesondere um eine Becherführung mit der ein Becher nur geführt wird, während der Becher auf einem Tisch steht. Die Becherführung berührt nicht die Mundrolle des Bechers, was Vorteile bezüglich Hygiene mit sich bringt.

**Bezugszeichenliste**

| | |
|---|---|
| 1 | Getränkeautomat |
| 2, 2' | Becher |
| 3 | Ausgabevorrichtung |
| 4, 4', 4'' | Befüllposition |
| 5 | Befüllvorrichtung |
| 6 | Drehkarussell |
| 7 | Außenzylinder |
| 8 | Ausgabeöffnung |
| 9 | Umfangswand |
| 10 | Ausnehmung |
| 11 | Blende |
| 12, 12' | Becherfänger |
| 13 | flache Auflagefläche |
| 14, 14' | Führungselemente |
| 15, 15' | Adaptionsring |
| 16, 16' | Ausgabekammer |
| 17 | Bechereinstellkammer |
| 18 | Steuereinrichtung |
| 19 | Reinigungseinrichtung |
| 20, 20' | Becherwerk |
| 21, 21' | Vereinzelungskammer |
| 22, 22' | Halbschale |
| 23, 23' | Ausnehmung |
| 24, 24' | Vorratskammer |
| 25 | Feder |
| 26, 26' | Becherstapel |
| 27 | Vereinzelungsvorrichtung |
| 28 | Steuervorrichtung |
| 30 | Antriebsvorrichtung |
| 31 | Elektromotor |
| 32 | Antriebsscheibe |
| 33 | Arretiereinrichtung |
| 34 | Steuerscheibe |
| 35 | Zahnelement |
| 36 | Ausbuchtung |
| 37 | Koppelplatte |
| 38 | Zahnrad |
| 38' | Zahnriemen |
| 39 | Steuernut |
| 40 | Sensorerkennungs- und Freigabeeinrichtung |
| | |
| A1, A2 | Alternativen des Verfahrens |
| a)-e2) | Verfahrensschritte |
| A | geschlossene Stellung |
| B, B' | erste und dritte geöffnete Stellung |
| C | zweite geöffnete Stellung |
| D | Stellung zum Ausgeben von Bechern |
| α, β | Winkel |

### WEITERE AUSFÜHRUNGSFORMEN

1. Getränkeautomat (1) zur Ausgabe von flüssigen Lebensmitteln, insbesondere von Getränken,
   mit einem Ausgabebereich (3, 8, 11),
   mit einer im Ausgabebereich (3, 8, 11) angeordneten Befüllvorrichtung (5),
   mit einer im Ausgabebereich (3, 8, 11) angeordneten beweglichen Ausgabevorrichtung (3), wobei die Ausgabevorrichtung (3) in eine geöffnete und in eine geschlossene Stellung (A; B; B'; C) bewegbar ist und zumindest eine Ausgabekammer (16; 16') aufweist, die der geöffneten Stellung (B; B'; C) zugeordnet ist,
   mit einer Steuereinrichtung (18), welche die Ausgabevorrichtung (3) derart steuert, dass die Ausgabevorrichtung (3) in der geöffneten Stellung (B; B'; C) die Ausgabekammer (16; 16') und die Befüllvorrichtung (5) für einen Nutzer zugänglich freigibt und in der geschlossenen Stellung (A) die Ausgabekammer (16; 16') und die Befüllvorrichtung (5) unzugänglich versperrt.
2. Getränkeautomat nach Ausführungsform 1,
   **dadurch gekennzeichnet,**
   dass die Ausgabevorrichtung (3) ein Drehkarussell (6) aufweist, wobei an dem Drehkarussell (6) eine Umfangswand (9) vorgesehen ist, welche zumindest eine im Bereich der Ausgabekammer (16; 16') vorgesehene Ausnehmung (10) aufweist.
3. Getränkeautomat nach Ausführungsform 1 oder 2,
   **dadurch gekennzeichnet,**
   dass die Ausgabevorrichtung (3) eine Linearfördereinrichtung aufweist, wobei die Linearfördereinrichtung mit einem Längswandabschnitt in Bewegungsrichtung versehen ist, der eine im Bereich der Ausgabekammer (16; 16') vorgesehene Ausnehmung (10) aufweist.
4. Getränkeautomat nach Ausführungsform 2 oder 3,
   **dadurch gekennzeichnet,**
   dass die Ausgabevorrichtung (3) eine Blende (11) aufweist, wobei an der Blende (11) eine Ausgabeöffnung (8) vorgesehen ist, wobei die Ausgabevorrichtung (3) hinter der Blende (11) bewegbar ausgebildet ist.
5. Getränkeautomat nach einem der vorstehenden Ausführungsformen,
   **dadurch gekennzeichnet,**
   dass zumindest ein Becherwerk (20; 20') vorgesehen ist, welches zur Bevorratung einer Vielzahl von Bechern (2; 2') ausgebildet ist, wobei das Becherwerk (20; 20') eine Vereinzelungsvorrichtung (27) aufweist, die zur Ausgabe einzelner Becher (2; 2') in die Ausgabekammer (16; 16') ausgebildet ist.
6. Getränkeautomat nach einem der vorstehenden Ausführungsformen,
   **dadurch gekennzeichnet,**
   dass die Ausgabevorrichtung (3) eine Führungseinrichtung (12; 13; 14; 14'; 15' 15') aufweist, die derart ausgebildet ist, dass sie einen sich in der Ausgabekammer (16; 16') befindenden Becher (2; 2') beim Öffnen der Ausgabevorrichtung (3) zu einer Befüllposition (4; 4'; 4'') an der Befüllvorrichtung (5) führt.
7. Getränkeautomat nach Ausführungsform 6,
   **dadurch gekennzeichnet,**
   dass an der Führungseinrichtung (12; 13; 14; 14'; 15' 15') Becherfänger (12; 12') vorgesehen sind, die dazu ausgebildet sind, einen jeweiligen Becher (2; 2') während der Ausgabe aus dem Becherwerk (20; 20') in die Ausgabekammer (16; 16') zu führen und/oder verkippsicher in der Ausgabekammer (16; 16') zu platzieren.
8. Getränkeautomat nach einem der vorstehenden Ausführungsformen,
   **dadurch gekennzeichnet,**
   dass die Ausgabevorrichtung (3) in eine erste geöffneten Stellung und in eine zweite geöffneten Stellung (B; B'; C) bewegbar ist, wobei die Ausgabevorrichtung (3) eine der zweiten geöffneten Stellung (B; B'; C) zugeordnete Bechereinstellkammer (17) aufweist und wobei die Steuereinrichtung (18) die Ausgabevorrichtung (3) derart steuert, dass in der zweiten geöffneten Stellung (B; B'; C) eine Ausgabe eines Bechers (2; 2') in die Bechereinstellkammer (17) unterbleibt und die Ausgabevorrichtung (3) in der zweiten geöffneten Stellung (B; B'; C) die Bechereinstellkammer (17) und die Befüllvorrichtung (5) für einen Nutzer zugänglich freigibt.
9. Getränkeautomat nach Ausführungsform 7 oder 8,
   **dadurch gekennzeichnet,**
   dass die Ausgabekammer (16; 16') eine ebene Auflagefläche (13) aufweist, wobei die Ausgabekammer (16; 16') und die Becherfänger (12; 12') derart ausgebildet sind, dass im Falle einer Ausgabe eines Bechers (2; 2') aus einem Becherwerk (20; 20') in eine Ausgabekammer (16; 16') der so ausgegebene Becher (2; 2') in der Ausgabekammer (16; 16') verkippsicher auf der Auflagefläche (13) steht.
10. Getränkeautomat nach einem der vorstehenden Ausführungsformen,
   **dadurch gekennzeichnet,**
   dass die Ausgabevorrichtung (3) in eine dritte geöffnete Stellung (B; B'; C) bewegbar ist und eine erste und eine zweite Ausgabekammer (16; 16') aufweist, wobei die zweite Ausgabekammer (16; 16') der dritten geöffneten Stellung (B; B'; C) zugeordnet ist, wobei die Steuereinrichtung (18) die Ausgabevorrichtung (3) derart steuert, dass die Ausgabevorrichtung (3) in der dritten geöffneten Stellung (B; B'; C) die zweite Ausgabekammer (16; 16') und die Befüllvorrichtung (5) für einen Nutzer zugänglich freigibt.
11. Getränkeautomat nach Ausführungsform 10,
   **dadurch gekennzeichnet,**
   dass ein erstes und zumindest ein zweites Becherwerk (20; 20') vorgesehen sind, wobei das erste Becherwerk (20; 20') zur Bevorratung von ersten Bechern (2; 2') eines ersten Typs oder einer ersten Größe und das zweite Becherwerk (20; 20') zur Bevorratung von zweiten Bechern (2; 2') eines zweiten Typs oder einer zweiten Größe ausgebildet sind, wobei das erste und zweite Becherwerk (20; 20') jeweils eine eigene Vereinzelungsvorrichtung (27) aufweisen oder eine gemeinsame Vereinzelungsvorrichtung (27) aufweisen.
12. Getränkeautomat nach einem der vorstehenden Ausführungsformen,
   **dadurch gekennzeichnet,**
   dass eine steuerbare Reinigungseinrichtung (19) vorgesehen ist, die von der Steuereinrichtung (18) derart steuerbar ist, dass die Reinigungseinrichtung (19) den Ausgabebereich (3, 8, 11) und/oder die Befüllvorrichtung (5) und/oder die Ausgabevorrichtung (3) in der geschlossenen Stellung (A) der Ausgabevorrichtung (3) reinigt.
13. Antriebsvorrichtung (30) für ein Drehkarussell (6), insbesondere für die Ausgabevorrichtung (3) eines Getränkeautomaten (1) nach einem der vorherigen Ausführungsformen,
   mit einem Elektromotor (31),
   mit einer drehfest mit dem Drehkarussell (6) gekoppelten Antriebsscheibe (32),
   - mit einem Riemen (38'),
   - wobei der Riemen (38') auf dem Umfang der Antriebsscheibe (32) läuft und
   - wobei die Antriebsscheibe über den Riemen mit dem Elektromotor (31) antreibbar vorgesehen ist,
   - wobei der Riemen (38') und die Antriebsscheibe (32) derart ausgelegt sind, dass der Riemen (38') auf dem Umfang der Antriebsscheibe (32) durchrutscht, sobald ein der Rotation des Drehkarussells (6) entgegen wirkender Widerstand ein Widerstandsmoment an der Antriebsscheibe (32) hervorruft, welches größer ist als ein von dem Riemen (38') an der Antriebsscheibe (32) hervorgerufenes Reibmoment.
14. Antriebsvorrichtung nach Ausführungsform 13,
   **dadurch gekennzeichnet,**
   dass eine Arretiereinrichtung (33) vorgesehen ist, welche die Antriebsscheibe (32) in zumindest einer Stellung (A; B; B'; C; D) des Drehkarussells (6) arretiert.
15. Antriebsvorrichtung nach Ausführungsform 14,
   **dadurch gekennzeichnet,**
   dass der Riemen (38') als Zahnriemen (38') ausgebildet ist, wobei die Arretiereinrichtung (33) zumindest ein Zahnelement (35) und eine feste Steuerscheibe (34) aufweist, wobei das zumindest eine Zahnelement (35) radial in der Steuerscheibe (34) geführt ist und in Umfangsrichtung linear in der Antriebsscheibe (32) geführt ist, wobei die Steuerscheibe (34) derart ausgelegt ist, dass das zumindest eine Zahnelement (35) in der zumindest einen Stellung (A; B; B'; C; D) des Drehkarussells (6) in den Zahnriemen (38') eingreift.
16. Becherwerk (20; 20') für einen Getränkeautomaten (1), insbesondere für einen Getränkeautomaten (1) nach einem der Ausführungsformen 1 bis 12,
   mit einer zentralen Vereinzelungskammer (21; 21'), welche Einrichtungen zur Vereinzelung und zur Ausgabe von in Becherstapeln (26) in der Vereinzelungskammer (21; 21') angeordneten Bechern (2; 2') aufweist, wobei um die Vereinzelungskammer (21; 21') eine rotierbare zylindrische Schale (22; 22') mit einer Ausnehmung (23, 23') angeordnet ist,
   mit einer Vielzahl von Vorratskammern (24; 24'), die zur Bevorratung weiterer Becherstapel (26; 26') vorgesehen sind und die zumindest abschnittsweise um die Vereinzelungskammer (21; 21') herum angeordnet sind,
   mit einer Vielzahl von Federn (25), die in den Vorratskammern (24; 24') vorgesehenen sind und die derart ausgelegt sind, dass sie den jeweiligen, in einer Vorratskammer (24; 24') bevorrateten, Becherstapel (26; 26') gegen die Schale (22; 22') drücken,
   mit einer Steuervorrichtung (28), welche die Schale (22; 22') derart steuert, dass die Schale (22; 22') die Position der Ausnehmung (23) beim Rotieren zu einer Vorratskammer (24; 24') verlagert, wobei ein Becherstapel (26; 26') von der Federkraft der jeweiligen Feder (25) durch die Ausnehmung (23) hindurch in die Vereinzelungskammer (21; 21') beförderbar ist.
17. Verfahren zum Betreiben eines Getränkeautomaten mit den Schritten:
   (a) Anfordern eines Getränks mittels eines benutzerbedienbaren Eingabemoduls;
   (b) Bewegen einer Ausgabevorrichtung (3) unter Verwendung einer Antriebsvorrichtung (30), wobei die Ausgabevorrichtung (3) aus einer geschlossenen Stellung (A), in der eine Befüllvorrichtung (5) des Getränkeautomaten (1) einem Benutzer unzugänglich versperrt ist, in eine geöffnete Stellung (B; B'; C), in welcher die Befüllvorrichtung (5) dem Benutzer zugänglich freigegeben ist, bewegt wird;
   (c) Zuführen eines Bechers (2; 2') an eine Befüllposition (4; 4'; 4'') an der Befüllvorrichtung (5);
   (d) Befüllen des Bechers (2; 2') mittels der Befüllvorrichtung (5);
   (e) Bewegen der Ausgabevorrichtung (3) mittels der Antriebsvorrichtung (30) in die geschlossene Stellung (A), nachdem der befüllte Becher (2; 2') entnommen wurde.
18. Verfahren nach Ausführungsform 17,
   **dadurch gekennzeichnet,**
   dass es an Getränkeautomaten (1) nach einem der Ausführungsformen 1-12 durchgeführt wird.
19. Verfahren nach Ausführungsform 17 oder 18,
   **dadurch gekennzeichnet,**
   dass als Antriebsvorrichtung (30) eine Antriebsvorrichtung (30) nach einem der Ausführungsformen 13-15 vorgesehen ist.
20. Verfahren nach einem der Ausführungsformen 17 bis 19,
   **dadurch gekennzeichnet,**
   dass eine Steuereinrichtung (18) zum Steuern der Antriebsvorrichtung (30) und der Befüllvorrichtung (5) vorgesehen ist, welche die Antriebsvorrichtung (30) und die Befüllvorrichtung (5) angepasst an das mittels des Eingabemoduls angeforderte Getränk steuert.
21. Verfahren nach einem der Ausführungsformen 17 bis 20, gekennzeichnet durch zumindest einen der folgenden Schritte:
   (a1) Lösen einer arretierten Antriebsvorrichtung (30) nach Schritt a) und vor Schritt b);
   (c1) Arretieren der Antriebsvorrichtung (30) nach Schritt b) und vor Schritt d);
   (d1) Lösen der Antriebsvorrichtung (30) vor Schritt e);
   (e1) Arretieren der Antriebsvorrichtung (30) nach Schritt e) ;
   (e2) Selbstreinigen des Ausgabebereichs (3, 8, 11) und/oder der Befüllvorrichtung (5) und/oder der Ausgabevorrichtung (3) nach Schritt e).
22. Verfahren nach einem der Ausführungsformen 17 bis 21,
   **dadurch gekennzeichnet,**
   dass das Eingabemodul derart vorgesehen ist, dass beim Anfordern eines Getränks als erste Alternative A1 das Befüllen eines mitgebrachten Bechers (2; 2') wählbar ist oder als zweite Alternative A2 das Befüllen eines aus einem Becherwerk (20; 20') über die Ausgabevorrichtung (3) an die Befüllposition (4; 4'; 4'') zugeführten Bechers (2; 2') wählbar ist und
   dass bei einer Anforderung der ersten Alternative A1 nach dem Schritt c) ein Schritt c2) des sensorischen Erkennens des zugeführten Bechers (2; 2') an der Befüllposition (4; 4'; 4'') und die Freigabe zum Befüllen des Bechers (2; 2') durch eine Sensorerkennungs- und Freigabeeinrichtung (40) erfolgt, oder
   dass bei einer Anforderung der zweiten Alternative A2 vor dem Schritt b) ein Schritt b1) des Ausgebens eines Bechers (2; 2') aus dem Becherwerk (20; 20') in eine Ausgabekammer (16; 16') der Ausgabevorrichtung (3) erfolgt, wobei anschließend Schritt b) und Schritt c) gleichzeitig erfolgen, wobei Schritt c) mittels der Ausgabevorrichtung (3) ausgeführt wird.

## Patentansprüche

1. Getränkeautomat (1) zur Ausgabe von flüssigen Lebensmitteln, insbesondere von Getränken,
mit einem Ausgabebereich (3, 8, 11),
mit einer im Ausgabebereich (3, 8, 11) angeordneten Befüllvorrichtung (5),
mit einer im Ausgabebereich (3, 8, 11) angeordneten beweglichen Ausgabevorrichtung (3), wobei die Ausgabevorrichtung (3) in eine geöffnete und in eine geschlossene Stellung (A; B; B'; C) bewegbar ist und zumindest eine Ausgabekammer (16; 16') aufweist, die der geöffneten Stellung (B; B'; C) zugeordnet ist,
mit einer Steuereinrichtung (18), welche die Ausgabevorrichtung (3) derart steuert, dass die Ausgabevorrichtung (3) in der geöffneten Stellung (B; B'; C) die Ausgabekammer (16; 16') und die Befüllvorrichtung (5) für einen Nutzer zugänglich freigibt und in der geschlossenen Stellung (A) die Ausgabekammer (16; 16') und die Befüllvorrichtung (5) unzugänglich versperrt.

2. Getränkeautomat nach Anspruch 1,
**dadurch gekennzeichnet,**
**dass** die Ausgabevorrichtung (3) ein Drehkarussell (6) aufweist, wobei an dem Drehkarussell (6) eine Umfangswand (9) vorgesehen ist, welche zumindest eine im Bereich der Ausgabekammer (16; 16') vorgesehene Ausnehmung (10) aufweist, und/oder dass die Ausgabevorrichtung (3) eine Linearfördereinrichtung aufweist, wobei die Linearfördereinrichtung mit einem Längswandabschnitt in Bewegungsrichtung versehen ist, der eine im Bereich der Ausgabekammer (16; 16') vorgesehene Ausnehmung (10) aufweist.

3. Getränkeautomat nach Anspruch 2,
**dadurch gekennzeichnet,**
**dass** die Ausgabevorrichtung (3) eine Blende (11) aufweist, wobei an der Blende (11) eine Ausgabeöffnung (8) vorgesehen ist, wobei die Ausgabevorrichtung (3) hinter der Blende (11) bewegbar ausgebildet ist.

4. Getränkeautomät näch einem der vorstehenden Ansprüche,
**dadurch gekennzeichnet,**
**dass** zumindest ein Becherwerk (20; 20') vorgesehen ist, welches zur Bevorratung einer Vielzahl von Bechern (2; 2'), insbesondere in Form von Becherstapeln, ausgebildet ist, wobei das Becherwerk (20; 20') eine Vereinzelungsvorrichtung (27) aufweist, die zur Ausgabe einzelner Becher (2; 2') in die Ausgabekammer (16; 16') ausgebildet ist.

5. Getränkeautomat nach Anspruch 4,
**dadurch gekennzeichnet,**
**dass** ein erstes und zumindest ein zweites Becherwerk (20; 20') vorgesehen sind, wobei das erste Becherwerk (20; 20') zur Bevorratung von ersten Bechern (2; 2') eines ersten Typs oder einer ersten Größe und das zweite Becherwerk (20; 20') zur Bevorratung von zweiten Bechern (2; 2') eines zweiten Typs oder einer zweiten Größe ausgebildet sind, wobei das erste und zweite Becherwerk (20; 20') jeweils eine eigene Vereinzelungsvorrichtung (27) aufweisen oder eine gemeinsame Vereinzelungsvorrichtung (27) aufweisen.

6. Getränkeautomat nach Anspruch 5,
**dadurch gekennzeichnet,**
**dass** das erste Becherwerk und das zweite Becherwerk dazu ausgebildet sind, eine unterschiedliche Anzahl von Becherstapeln zu bevorraten und/oder derart ausgebildet sind, dass sowohl die ersten Becher als auch die zweiten Becher darin bevorratet werden können.

7. Getränkeautomat nach einem der vorstehenden Ansprüche,
**dadurch gekennzeichnet,**
**dass** die Ausgabevorrichtung (3) eine Führungseinrichtung (12; 13; 14; 14'; 15' 15') aufweist, die derart ausgebildet ist, dass sie einen sich in der Ausgabekammer (16; 16') befindenden Becher (2; 2') beim Öffnen der Ausgabevorrichtung (3) zu einer Befüllposition (4; 4'; 4'') an der Befüllvorrichtung (5) führt,
wobei an der Führungseinrichtung (12; 13; 14; 14'; 15' 15') bevorzugt Becherfänger (12; 12') vorgesehen sind, die dazu ausgebildet sind, einen jeweiligen Becher (2; 2') während der Ausgabe aus dem Becherwerk (20; 20') in die Ausgabekammer (16; 16') zu führen und/oder verkippsicher in der Ausgabekammer (16; 16') zu platzieren,
wobei die Ausgabekammer (16; 16') besonders bevorzugt eine ebene Auflagefläche (13) aufweist und die Ausgabekammer (16; 16') und die Becherfänger (12; 12') derart ausgebildet sind, dass im Falle einer Ausgabe eines Bechers (2; 2') aus einem Becherwerk (20; 20') in eine Ausgabekammer (16; 16') der so ausgegebene Becher (2; 2') in der Ausgabekammer (16; 16') verkippsicher auf der Auflagefläche (13) steht.

8. Getränkeautomat nach einem der vorstehenden Ansprüche,
**dadurch gekennzeichnet,**
**dass** die Ausgabevorrichtung (3) in eine erste geöffneten Stellung und in eine zweite geöffneten Stellung (B; B'; C) bewegbar ist, wobei die Ausgabevorrichtung (3) eine der zweiten geöffneten Stellung (B; B'; C) zugeordnete Bechereinstellkammer (17) aufweist und wobei die Steuereinrichtung (18) die Ausgabevorrichtung (3) derart steuert, dass in der zweiten geöffneten Stellung (B; B'; C) eine Ausgabe eines Bechers (2; 2') in die Bechereinstellkammer (17) unterbleibt und die Ausgabevorrichtung (3) in der zweiten geöffneten Stellung (B; B'; C) die Bechereinstellkammer (17) und die Befüllvorrichtung (5) für einen Nutzer zugänglich freigibt.

9. Getränkeautomat nach einem der vorstehenden Ansprüche,
**dadurch gekennzeichnet,**
**dass** die Ausgabevorrichtung (3) in eine dritte geöffnete Stellung (B; B'; C) bewegbar ist und eine erste und eine zweite Ausgabekammer (16; 16') aufweist, wobei die zweite Ausgabekammer (16; 16') der dritten geöffneten Stellung (B; B'; C) zugeordnet ist, wobei die Steuereinrichtung (18) die Ausgabevorrichtung (3) derart steuert, dass die Ausgabevorrichtung (3) in der dritten geöffneten Stellung (B; B'; C) die zweite Ausgabekammer (16; 16') und die Befüllvorrichtung (5) für einen Nutzer zugänglich freigibt.

10. Getränkeautomat nach einem der vorstehenden Ansprüche,
**dadurch gekennzeichnet,**
**dass** eine steuerbare Reinigungseinrichtung (19) vorgesehen ist, die von der Steuereinrichtung (18) derart steuerbar ist, dass die Reinigungseinrichtung (19) den Ausgabebereich (3, 8, 11) und/oder die Befüllvorrichtung (5) und/oder die Ausgabevorrichtung (3) in der geschlossenen Stellung (A) der Ausgabevorrichtung (3) reinigt.

11. Antriebsvorrichtung (30) für ein Drehkarussell (6), insbesondere für die Ausgabevorrichtung (3) eines Getränkeautomaten (1) nach einem der vorherigen Ansprüche,
mit einem Elektromotor (31),
mit einer drehfest mit dem Drehkarussell (6) gekoppelten Antriebsscheibe (32),
- mit einem Riemen (38'),
- wobei der Riemen (38') auf dem Umfang der Antriebsscheibe (32) läuft und
- wobei die Antriebsscheibe über den Riemen mit dem Elektromotor (31) antreibbar vorgesehen ist,
- wobei der Riemen (38') und die Antriebsscheibe (32) derart ausgelegt sind, dass der Riemen (38') auf dem Umfang der Antriebsscheibe (32) durchrutscht, sobald ein der Rotation des Drehkarussells (6) entgegen wirkender Widerstand ein Widerstandsmoment an der Antriebsscheibe (32) hervorruft, welches größer ist als ein von dem Riemen (38') an der Antriebsscheibe (32) hervorgerufenes Reibmoment.

12. Antriebsvorrichtung nach Anspruch 11,
**dadurch gekennzeichnet,**
**dass** eine Arretiereinrichtung (33) vorgesehen ist, welche die Antriebsscheibe (32) in zumindest einer Stellung (A; B; B'; C; D) des Drehkarussells (6) arretiert,
wobei der Riemen (38') bevorzugt als Zahnriemen (38') ausgebildet ist und die Arretiereinrichtung (33) bevorzugt zumindest ein Zahnelement (35) und eine feste Steuerscheibe (34) aufweist, wobei das zumindest eine Zahnelement (35) radial in der Steuerscheibe (34) geführt ist und in Umfangsrichtung linear in der Antriebsscheibe (32) geführt ist, wobei die Steuerscheibe (34) derart ausgelegt ist, dass das zumindest eine Zahnelement (35) in der zumindest einen Stellung (A; B; B'; C; D) des Drehkarussells (6) in den Zahnriemen (38') eingreift.

13. Becherwerk (20; 20') für einen Getränkeautomaten (1), insbesondere für einen Getränkeautomaten (1) nach einem der Ansprüche 1 bis 10,
mit einer zentralen Vereinzelungskammer (21; 21'), welche Einrichtungen zur Vereinzelung und zur Ausgabe von in Becherstapeln (26) in der Vereinzelungskammer (21; 21') angeordneten Bechern (2; 2') aufweist, wobei um die Vereinzelungskammer (21; 21') eine rotierbare zylindrische Schale (22; 22') mit einer Ausnehmung (23, 23') angeordnet ist,
mit einer Vielzahl von Vorratskammern (24; 24'), die zur Bevorratung weiterer Becherstapel (26; 26') vorgesehen sind und die zumindest abschnittsweise um die Vereinzelungskammer (21; 21') herum angeordnet sind,
mit einer Vielzahl von Federn (25), die in den Vorratskammern (24; 24') vorgesehenen sind und die derart ausgelegt sind, dass sie den jeweiligen, in einer Vorratskammer (24; 24') bevorrateten, Becherstapel (26; 26') gegen die Schale (22; 22') drücken,
mit einer Steuervorrichtung (28), welche die Schale (22; 22') derart steuert, dass die Schale (22; 22') die Position der Ausnehmung (23) beim Rotieren zu einer Vorratskammer (24; 24') verlagert, wobei ein Becherstapel (26; 26') von der Federkraft der jeweiligen Feder (25) durch die Ausnehmung (23) hindurch in die Vereinzelungskammer (21; 21') beförderbar ist.

14. Verfahren zum Betreiben eines Getränkeautomaten, insbesondere eines Getränkeautomaten (1) nach einem der Ansprüche 1-10, mit den Schritten:
(a) Anfordern eines Getränks mittels eines benutzerbedienbaren Eingabemoduls;
(b) Bewegen einer Ausgabevorrichtung (3) unter Verwendung einer Antriebsvorrichtung (30), insbesondere einer Antriebsvorrichtung nach einem der Ansprüche 11 oder 12, wobei die Ausgabevorrichtung (3) aus einer geschlossenen Stellung (A), in der eine Befüllvorrichtung (5) des Getränkeautomaten (1) einem Benutzer unzugänglich versperrt ist, in eine geöffnete Stellung (B; B'; C), in welcher die Befüllvorrichtung (5) dem Benutzer zugänglich freigegeben ist, bewegt wird;
(c) Zuführen eines Bechers (2; 2') an eine Befüllposition (4; 4'; 4'') an der Befüllvorrichtung (5);
(d) Befüllen des Bechers (2; 2') mittels der Befüllvorrichtung (5);
(e) Bewegen der Ausgabevorrichtung (3) mittels der Antriebsvorrichtung (30) in die geschlossene Stellung (A), nachdem der befüllte Becher (2; 2') entnommen wurde.

15. Verfahren nach Anspruch 14,
**dadurch gekennzeichnet,**
**dass** das Eingabemodul derart vorgesehen ist, dass beim Anfordern eines Getränks als erste Alternative A1 das Befüllen eines mitgebrachten Bechers (2; 2') wählbar ist oder als zweite Alternative A2 das Befüllen eines aus einem Becherwerk (20; 20') über die Ausgabevorrichtung (3) an die Befüllposition (4; 4'; 4'') zugeführten Bechers (2; 2') wählbar ist, und/oder
**dass** bei einer Anforderung der ersten Alternative A1 nach dem Schritt c) ein Schritt c2) des sensorischen Erkennens des zugeführten Bechers (2; 2') an der Befüllposition (4; 4'; 4'') und die Freigabe zum Befüllen des Bechers (2; 2') durch eine Sensorerkennungs- und Freigabeeinrichtung (40) erfolgt, und/oder
**dass** bei einer Anforderung der zweiten Alternative A2 vor dem Schritt b) ein Schritt b1) des Ausgebens eines Bechers (2; 2') aus dem Becherwerk (20; 20') in eine Ausgabekammer (16; 16') der Ausgabevorrichtung (3) erfolgt, wobei anschließend Schritt b) und Schritt c) gleichzeitig erfolgen, wobei Schritt c) mittels der Ausgabevorrichtung (3) ausgeführt wird.
